(19) **Europäisches Patentamt / European Patent Office / Office européen des brevets**

(11) **EP 4 685 715 A1**

(12) **EUROPEAN PATENT APPLICATION**

(43) Date of publication:
28.01.2026 Bulletin 2026/05

(21) Application number: 25188031.6

(22) Date of filing: 08.07.2025

(51) International Patent Classification (IPC):
$G06Q\ 10/06^{(2023.01)}$     $G06Q\ 30/018^{(2023.01)}$

(52) Cooperative Patent Classification (CPC):
G06Q 10/06; G06Q 10/30; G06Q 30/018;
G06Q 50/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.07.2024 JP 2024120245

(71) Applicant: ASICS Corporation
Kobe-shi, Hyogo 650-0021 (JP)

(72) Inventors:
• OOSAKI, Takashi
  Kobe-shi, 650-0021 (JP)
• WAKASUGI, Shinsaku
  Kobe-shi, 650-0021 (JP)
• HATANO, Genki
  Kobe-shi, 650-0021 (JP)

(74) Representative: TBK
Bavariaring 4-6
80336 München (DE)

(54) **ENVIRONMENTAL IMPACT EVALUATION SYSTEM, ENVIRONMENTAL IMPACT EVALUATION METHOD, AND STORAGE MEDIUM STORING THEREIN ENVIRONMENTAL IMPACT EVALUATION PROGRAM**

(57) An environmental impact evaluation system 10 includes: a storage unit 110 that stores identification information for identifying the product, the identification information being associated with related information of the product corresponding to a user who uses the product, material information related to a material of the product, and manufacturing information related to manufacturing of the product; a prediction information generation unit 120 that generates prediction information including: material prediction information related to a material of the product generated in relation to manufacturing of the product corresponding to the identification information; and manufacturing prediction information related to the product, based on the material information and the manufacturing information; an environmental indicator calculation unit 130 that calculates a first environmental indicator, based on the prediction information including the material prediction information and the manufacturing prediction information; and an output unit 140 that outputs the calculated first environmental indicator.

FIG. 2

ENVIRONMENTAL INDICATOR CALCULATION UNIT 10

EP 4 685 715 A1

## Description

### CROSS-REFERENCE TO RELATED APPLICATION

This application claims priority to Japanese Patent Application No. 2024-120245, the disclosures of which are incorporated herein by reference in their entirety.

### BACKGROUND

#### Technical field

The present disclosure relates generally to an environmental impact evaluation system, an environmental impact evaluation method, and a storage medium storing therein an environmental impact evaluation program.

#### Background Information

In recent years, companies that manufacture products have been working on environmental issues such as amount of carbon dioxide emissions and global warming. For example, environmental impact evaluation values such as the amount of greenhouse gas emitted by each organization or each product have been disclosed. Users are also interested in initiatives on environmental issues and may purchase products in consideration of such environmental impact evaluation values.

Companies are required to appropriately understand the impacts on the environment related to the manufacturing of products, or the like, and present them to users.

For example, in an emission simulation system disclosed in Japanese Unexamined Patent Publication No. 2024-053672, information indicating the amount of carbon dioxide emissions in a manufacturing process of each member constituting a target product is used. Specifically, the emission simulation system has improved accuracy in estimation of the amount of carbon dioxide emissions at the time of designing a product by utilizing the amount of carbon dioxide emissions in the manufacturing process of each member published by the supplier or manufacturer of these members.

### SUMMARY

However, in the emission simulation system of Japanese Unexamined Patent Publication No. 2024-053672, the amount of carbon dioxide emissions related to each individual product desired by the user is not considered, and there is a possibility that the amount of carbon dioxide emissions based on the individual circumstances of the product cannot be appropriately calculated.

In view of the above, an object of the present disclosure is to provide an environmental impact evaluation system, an environmental impact evaluation method, and a storage medium storing therein an environmental impact evaluation program according to which it is possible to appropriately evaluate the environmental impact related to the product desired by the user in accordance with the circumstances for each product.

An aspect of the present disclosure relates to an environmental impact evaluation system evaluating an environmental impact related to a product that is any of clothing, footwear, and accessories. The environmental impact evaluation system includes: a storage unit, a prediction information generation unit, an environmental indicator calculation unit, and an output unit. The storage unit stores identification information identifies the product, the identification information being associated with related information of the product corresponding to a user who uses the product, material information related to a material of the product, and manufacturing information related to manufacturing of the product. The prediction information generation unit generates prediction information including: material prediction information related to a material of the product generated in relation to manufacturing of the product corresponding to the identification information; and manufacturing prediction information related to manufacturing of the product, based on the material information and the manufacturing information. The environmental indicator calculation unit calculates a first environmental indicator related to the environmental impact related to the product, based on the prediction information including the material prediction information and the manufacturing prediction information. The output unit outputs the calculated first environmental indicator.

According to this aspect, the storage unit stores the identification information for identifying the product, the material information, and the manufacturing information, and the prediction information generation unit generates the material prediction information and the manufacturing prediction information of the product, based on the material information and the manufacturing information. The environmental indicator calculation unit calculates the first environmental indicator, based on the material prediction information and the manufacturing prediction information, and the output unit outputs the first environmental indicator. Thus, it is possible to appropriately evaluate the environmental impact related to the product desired by the user in accordance with the circumstances for each product.

An aspect of the present disclosure relates to an environmental impact evaluation method executed by an environmental impact evaluation system evaluating an environmental impact related to a product that is any of clothing, footwear, and accessories. The environmental impact evaluation method acquires, from a storage unit, identification information for identifying the product, the identification information being associated with related information of the product corresponding to a user who uses the product, material information related to a material of the product, and manufacturing information related to manufacturing of the product. Then, the environmental impact evaluation method generates prediction information which includes: material prediction information related to a material of the product generated in relation to manufacturing of the product corresponding to the identification information; and manufacturing prediction information related to manufacturing of the product, based on the material information and the manufacturing information. Furthermore, the environmental impact evaluation method calculates a first environmental indicator related to the environmental impact related to the product, based on the prediction information including the material prediction information and the manufacturing prediction information; and outputs the calculated first environmental indicator.

According to this aspect, the storage unit stores the identification information for identifying the product, the material information, and the manufacturing information, and the material prediction information and the manufacturing prediction information of the product are generated based on the material information and the manufacturing information in the environmental impact evaluation method. In the environmental impact evaluation method, a first environmental indicator is calculated and output based on the material prediction information and the manufacturing prediction information. Thus, it is possible to appropriately evaluate the environmental impact related to the product desired by the user in accordance with the circumstances for each product.

An aspect of the present disclosure relates to a storage medium storing therein an environmental impact evaluation program causing a computer to execute an environmental impact evaluation method evaluating an environmental impact related to a product that is any of clothing, footwear, and accessories. The environmental impact evaluation program acquires, from a storage unit, identification information for identifying the product, the identification information being associated with related information of the product corresponding to a user who uses the product, material information related to a material of the product, and manufacturing information related to manufacturing of the product. Then, the environmental impact evaluation program generates prediction information which includes: material prediction information related to a material of the product generated in relation to manufacturing of the product corresponding to the identification information; and manufacturing prediction information related to manufacturing of the product, based on the material information and the manufacturing information. Furthermore, the environmental impact evaluation program calculates a first environmental indicator related to the environmental impact related to the product, based on the prediction information including the material prediction information and the manufacturing prediction information; and outputs the calculated first environmental indicator.

According to this aspect, the storage unit stores the identification information for identifying the product, the material information, and the manufacturing information, and the environmental impact evaluation program in the storage medium generates the material prediction information and the manufacturing prediction information of the product, based on the material information and the manufacturing information. The environmental impact evaluation program calculates the first environmental indicator, based on the material prediction information and the manufacturing prediction information, and outputs the first environmental indicator. Thus, it is possible to appropriately evaluate the environmental impact related to the product desired by the user in accordance with the circumstances for each product.

**BRIEF DESCRIPTION OF THE DRAWINGS**

FIG. 1 is a diagram for explaining the environmental impact related to a product in the life cycle of the product.

FIG. 2 is a system schematic diagram illustrating an environmental impact evaluation system 10 according to a first embodiment of the present disclosure.

FIG. 3 is a diagram illustrating a specific example of user information U10.

FIG. 4 is a diagram schematically illustrating an example of a database in which various types of information necessary for manufacturing footwear are stored.

FIG. 5 is a diagram illustrating an example in which the amount of carbon dioxide emissions resulting when footwear is manufactured (including use of materials) is output as an environmental indicator.

FIG. 6 is a diagram schematically illustrating an example of a database in which various types of information necessary for considering the environmental impact related to the footwear in the life cycle from the manufacturing (including use of materials) to the disposal of the footwear are stored.

FIG. 7 is a diagram illustrating an example in which the amount of carbon dioxide emissions in the life cycle from the manufacturing (including use of materials) to the disposal of footwear is output as an environmental indicator.

FIG. 8 is a flowchart illustrating a flow of processing of the environmental impact evaluation method M100 executed by the environmental impact evaluation system 10 according to the first embodiment of the present disclosure.

FIG. 9 is a system schematic diagram illustrating an environmental impact evaluation system 20 according to a second embodiment of the present disclosure.

FIG. 10 is a diagram illustrating an example in which an amount of carbon dioxide emissions (including material record and manufacturing record) emitted in the life cycle from manufacturing (including use of materials) to disposal of footwear is output as an environmental indicator.

FIG. 11 is a flowchart illustrating a flow of processing of the environmental impact evaluation method M200 executed by the environmental impact evaluation system 20 according to the second embodiment of the present disclosure.

FIG. 12 is a system schematic diagram illustrating an environmental impact evaluation system 30 according to a third embodiment of the present disclosure.

FIG. 13 is a diagram illustrating a specific example of user information U30.

FIG. 14 is a diagram illustrating an example in which an amount of carbon dioxide emissions (including operational records for materials, manufacturing, transportation, use, and disposal) emitted in the life cycle from manufacturing (including use of materials) to disposal of footwear is output as an environmental indicator.

FIG. 15 is a flowchart illustrating a flow of processing of an environmental impact evaluation method M300 executed by the environmental impact evaluation system 30 according to the third embodiment of the present disclosure.

FIG. 16 is a diagram illustrating predicted values and actual values before and after manufacturing of footwear (product) related to material information and manufacturing information of the footwear (product) desired by a user.

FIG. 17 is a diagram illustrating an example in which an amount of carbon dioxide emissions (grade assigned) emitted in the life cycle from manufacturing (including use of materials) to disposal of footwear is output as an environmental indicator.

FIG. 18 is a diagram illustrating an overview of the product management system 400.

**DETAILED DESCRIPTION**

Hereinafter, preferred embodiments of the present disclosure will be described in detail with reference to the accompanying drawings. Note that the embodiments described below are merely specific examples for carrying out the present disclosure, and are not to be construed as limiting the present disclosure. To facilitate understanding of the description, a constituting element common to multiple drawings is denoted by the same reference sign whenever possible, and redundant descriptions may be omitted.

<First Embodiment>

[Life cycle of the product]

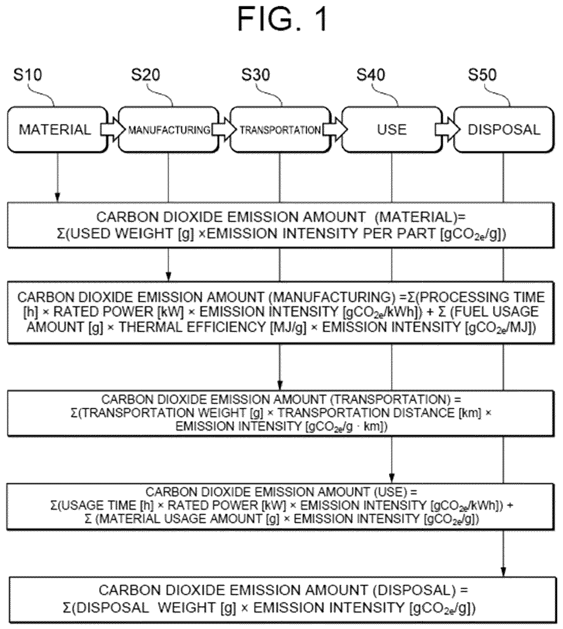

FIG. 1 is a diagram for explaining the environmental impact related to a product in the life cycle of the product. As illustrated in FIG. 1, the environmental impact related to a product can be expressed by using the amount of carbon dioxide emission in material S 10, manufacturing S20, transportation S30, use S40, and disposal S50. The amount of carbon dioxide emissions can be calculated based on the amount of activity and the emission intensity, which will be specifically described below.

The material S10 is a material used for a product, and for example, a different material may be used for each product or product part, or the weight of the material used may be different according to the size, or the like, even in a same product or product part. For example, as the environmental impact related to the material S10 of the product, the amount of carbon dioxide emissions can be expressed using the following (Expression 1). The used weight is obtained by subtracting the remaining amount from the input weight of the material, and includes process loss, and the like. For example, when a piece of fabric is cut and used for a product, the total weight of the piece of fabric including the loss may be used as the used weight. Further, when a 3D printer is used to manufacture a product, the reduction amount of the resin ink may be used as the used weight.

Amount of carbon dioxide emissions (material)=$\Sigma$(used weight [g] $\times$ emission intensity per part [gCO$_{2e}$/g])　　　　(Expression 1)

The manufacturing S20 is a process of manufacturing a product, and includes, for example, manufacturing a product in a factory. For example, as the environmental impact related to the manufacturing S20 of the product, in the operation of the factory, the amount of carbon dioxide emissions can be expressed using the following (Expression 2), based on the processing time for processing the product, the rated power, the fuel usage amount, the thermal efficiencies, and the like.

Amount of carbon dioxide emissions (manufacturing) =$\Sigma$(processing time [h] $\times$ rated power [kW] $\times$ emission intensity [gCO$_{2e}$/kWh]) + $\Sigma$ (fuel usage amount [g] $\times$ thermal efficiencies [MJ/g] $\times$ emission intensity [gCO$_{2e}$/MJ])　　　　(Expression 2)

Alternatively, the number obtained by dividing the past factory performance-based power consumption (for example, annual power consumption) by the actual number of products manufactured (defective products are excluded) may be used as the estimated value.
The transportation S30 is a process of transporting a product, and includes, for example, delivering a manufactured product to a predetermined transportation destination (e.g., a purchaser). The transportation also includes transportation of a raw material to a manufacturing factory, transportation of waste from the manufacturing factory to a waste disposal site, and transportation when the product is returned from a purchaser. For example, as the environmental impact related to the transportation S30 of the product, in truck transportation, railroad transportation, marine transportation, air transportation, and the like, the amount of carbon dioxide emissions can be expressed using the following (Expression 3), based on the transportation weight, the transportation distance, and the like.

Amount of carbon dioxide emissions (transportation) =$\Sigma$(transportation weight [g] $\times$ transportation distance [km] $\times$ emission intensity [gCO$_{2e}$/g $\cdot$ km])　　　　(Expression 3)

Use S40 is a process in which a user uses a product, and includes, for example, the user cleaning, repairing, and storing the product. For example, as the environmental impact related to the use S40 of the product, in the cleaning of the product using a washing machine, or the like, the amount of carbon dioxide emissions can be expressed using the following (Expression 4), based on the usage time in which the washing machine is operated, the rated power, and the usage amount of water, a detergent, or the like.

Amount of carbon dioxide emissions (use) =$\Sigma$(usage time [h] $\times$ rated power [kW] $\times$ emission intensity [gCO$_{2e}$/kWh]) + $\Sigma$ (material usage amount [g] $\times$ emission intensity [gCO$_{2e}$/g])　　　　(Expression 4)

Further, in this term, a consumption amount and a disposal amount of a maintenance agent (oil, or the like) for repair and storage, and a power consumption amount at the time of using an electric appliance other than the washing machine, such as a dryer, may be included within a possible range.
Disposal S50 is a process in which a user disposes of a product, and includes, for example, the user disposing of the product. For example, as the environmental impact related to the disposal S50 of the product, the amount of carbon dioxide emissions can be expressed using the following (Equation 5), based on the waste weight in incineration in a factory, landfill, recycling, or the like. Further, the treatment of waste produced in a manufacturing factory is also calculated in this term. As the emission intensity, the one specified according to each disposal method is mainly used.

Amount of carbon dioxide emissions (disposal) =$\Sigma$(waste weight [g] $\times$ emission intensity [gCO$_{2e}$/g])　　　　(Expression 5)

As described above, a product impacts the environment by the material used for manufacturing it and during its life cycle from manufacturing to disposal, and the impact can be evaluated by using the amount of carbon dioxide emissions, and the like.

In addition, the amount of carbon dioxide emissions does not necessarily have to be calculated based on each term affecting the amount of carbon dioxide emissions, by clearly identifying in each step, namely, the material S10, the manufacturing S20, the transportation S30, the use S40, and the disposal S50 described above; and may be calculated including other terms affecting the amount of carbon dioxide emissions, or may be calculated by not clearly identifying each of the steps described above. Strictly speaking, since the emission intensity of the material S10 includes the transportation and disposal loss of the unprocessed raw materials used for manufacturing the raw materials of the product parts, the material-derived amount of carbon dioxide emissions is not necessarily calculated from the material itself, but includes calculation results corresponding to the transportation of the unprocessed raw materials, the weight loss during the material manufacturing using the unprocessed raw materials, and the energy consumption amount during the material manufacturing. Therefore, it is indicated that the amount of carbon dioxide emissions in the manufacturing S20 includes the product parts and the manufacturing-related factors at the time of product assembly in the range of calculation, and the amount of carbon dioxide emissions in the transportation S30 is calculated from the energy consumption amount associated with the product manufacturing of the company. The calculation terms for the amount of carbon dioxide emissions in the use S40 vary depending on the maintenance method actually used by the user, and the calculation range includes not only the factor related to discharge treatment of water used in washing in water assumed by us but also the factors related to power consumption of home appliances (washing machines, dryers, and the like) and to consumption of materials such as deodorants and moisturizing oils, and the like.

[Configuration of environmental impact evaluation system]

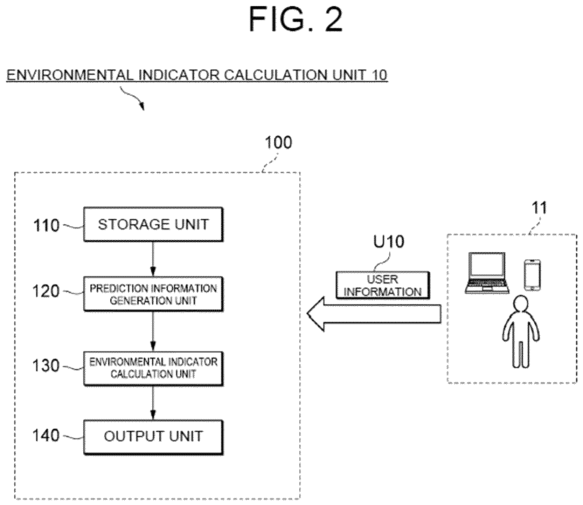

FIG. 2 is a system schematic diagram illustrating an environmental impact evaluation system 10 according to a first embodiment of the present disclosure. As illustrated in FIG. 2, the environmental impact evaluation system 10 includes a server apparatus 100 and a terminal 11. The server apparatus 100 includes a storage unit 110, a prediction information generation unit 120, an environmental indicator calculation unit 130, and an output unit 140. The server apparatus 100 may acquire user information U10 from the terminal 11 and output an environmental indicator to the terminal 11.

The server apparatus 100 may acquire, from an electronic commerce (EC) site, information input by the user at the EC site when the user orders a product, as the user information U10.

In the present embodiment, in relation to the environmental impact evaluation system 10, footwear such as shoes will be described as an example of a product whose environmental impact is evaluated; however, the product is not limited thereto. For example, the product whose environmental impact is evaluated may be footwear parts (such as insoles), clothing (such as clothes, socks, and hats), accessories, and other products used directly or indirectly along a part of the body (such as rings, glasses, goggles, earrings, headphones, and earphones).

The terminal 11 may be a terminal of a user or a terminal installed on a store, and includes, for example, a personal computer, a tablet, and a smartphone.

A user, a store clerk, or the like, may use the terminal 11 to input user information U10 about the user, to update and confirm the user information U10, and further to input and confirm information for the user to order a product.

The user, the store clerk, or the like, may confirm or update the information of the product when the user orders the product, after the user purchases the product, and the like.

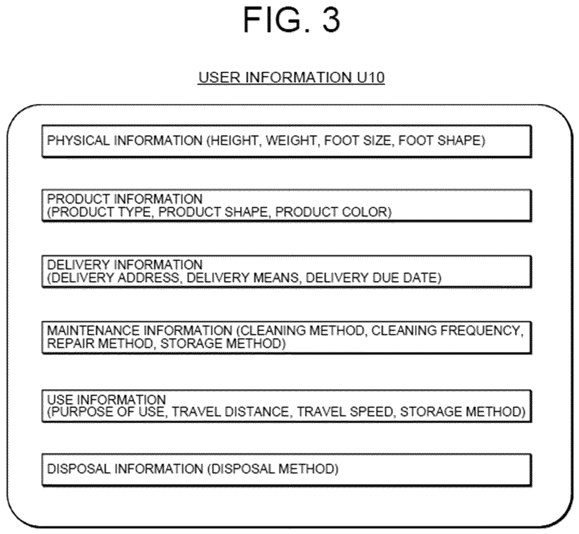

FIG. 3 is a diagram illustrating a specific example of the user information U10. As illustrated in FIG. 3, the user information U10 includes physical information, product information, delivery information, maintenance information, use information, and disposal information.

The physical information includes information related to a user's height, weight, foot size, foot shape, and the like. For example, the user inputs the height and weight of the user using the terminal 11. The information related to the foot size and the foot shape may be acquired by measuring the foot of the user using a dedicated application installed on a smartphone, or the like, or a dedicated measuring device installed on a store. It should be noted that the information related to the foot shape may be scan data of the user's feet, or may be 3D model data generated based on the scan data.

More specifically, the physical information may be information related to a body that affects a change in a product due to use. For example, the physical information includes information related to the user's height, weight, gender, size or shape of the part of the body corresponding to the product, and tendency of movement. The information related to the tendency of movement includes, for example, information related to the tendency of the way of walking or running (for example, the number of pitches, the width of the stride, the angle and type of pronation, the type of grounding, the pressure applied to the foot, and the like). When the product is a shoe or an insole, the size or shape of the part of the body corresponding to the product includes, for example, a foot size, an arch size, width or height, and a foot shape.

The information related to the user including the physical information may be acquired from, for example, a terminal such as a smartphone of the user used by the user. The information may be acquired from a system that executes an application used by the user. Here, the application used by the user may be, for example, an application for managing a record of use of a product, particularly, for example, a running record application. In addition, the information related to the user including the physical information may be acquired from a terminal used by the user or a system that executes an application used by the user through a terminal installed on the store.

The product information includes information related to a product type, a product shape, a product color, and the like. For example, the user inputs a product type (model), a product shape, and a product color of a desired product using the terminal 11. Here, the desired product may be a product ordered by the user (including a product which is actually ordered and a product which is considered to be ordered). Further, the product shape and product color may be set in detail for each product and product part. Further, the product information is not limited to that which presupposes an order, and may include preference information including a product type (model), a product shape, a product color, and the like, preferred by the user.

The product desired by the user may be a product manufactured on a custom-made basis, a product manufactured in small lots, or a product manufactured in large quantities and put on the market.

The delivery information includes information related to a delivery address, a delivery means, a delivery due date, and the like. For example, the user inputs a delivery address, a delivery means, and a delivery due date using the terminal 11. The delivery address is a delivery destination of the product ordered by the user. The delivery means includes truck transportation, railroad transportation, marine transportation, air transportation, and the like, and may be automatically set based on the delivery address or may be input by the user. The delivery due date may be automatically set based on the product information of the ordered product and the delivery address, or a desired delivery due date may be input by the user.

There is a case where the delivery means and the delivery due date are related to each other. For example, it may be configured such that the user can input the delivery means and the delivery due date by using the terminal 11 in consideration of the environmental impact while checking the environmental indicator described later.

The maintenance information includes information related to a cleaning method, a cleaning frequency, a repair method, and a storage method, and the like. For example, the user uses the terminal 11 to input a cleaning method, a cleaning frequency, a repair method, and a storage method for the ordered product. Specifically, the cleaning method includes using a washing machine, hand washing, and the like, and the cleaning frequency includes once a week, once a month, and the like. Cleaning other than washing includes deodorization by spraying, and the like. The repair method, in the case of a textile product, includes embroidering repair, or the like, and also includes a method using a fiber raw material, or the like. Further, for replacement of a sole, use of materials (tape and adhesive material) and additional power consumption due to processing can be considered. The storage method includes a method using moisture absorbers, a deodorant spray, or the like.

The use information includes information related to the purpose of use, the use frequency, the usage intensity, the condition of the road surface at the time of use (for example, concrete, soil, lawn, tartan track, or the like), the travel distance, the travel speed, the storage method, and the like. For example, the user uses the terminal 11 to input the purpose of use, the use frequency, the usage intensity, the condition of the road surface at the time of use, the travel distance, the travel speed, and the storage method of the ordered product. Specifically, the purpose of use includes for commuting, running, and the like, the use frequency is a frequency of use during a specific period, the travel distance is a travel distance per day, per week, or per month, and the like, and the travel speed is a travel speed at that time. The storage method includes indoor storage, outdoor storage, use or non-use of a shoe tree, and the like.

The disposal information includes information related to a disposal method. For example, the user may input the disposal method of the ordered product using the terminal 11, or the disposal method based on the municipality information estimated from the delivery address may be automatically set.

Note that the user information U10 does not necessarily have to include all of the above-described information, and is not limited to the above-described information. Information related to a user who orders, uses, or disposes of a product and information related to the product may be input using the terminal 11 or automatically acquired, as the user information U10.

Returning to the description of FIG. 2, the storage unit 110 stores information necessary for manufacturing the footwear (product), information necessary evaluating the environmental impact, and the like. For example, the storage unit 110 may be provided in the server apparatus 100, may be configured separately from the server apparatus 100, may be configured by a plurality of storage units, or may be in a database format.

Specifically, the storage unit 110 stores identification information for identifying a product, material information related to a material of the product, and manufacturing information related to manufacturing of the product. The identification information identifies a product, and may be, for example, a unique management number composed of alphanumeric characters and symbols, or a two-dimensional bar code. The identification information is associated with product-related information corresponding to a user who uses the product. For example, the identification information is associated with material information and manufacturing information which are information necessary for manufacturing footwear (product).

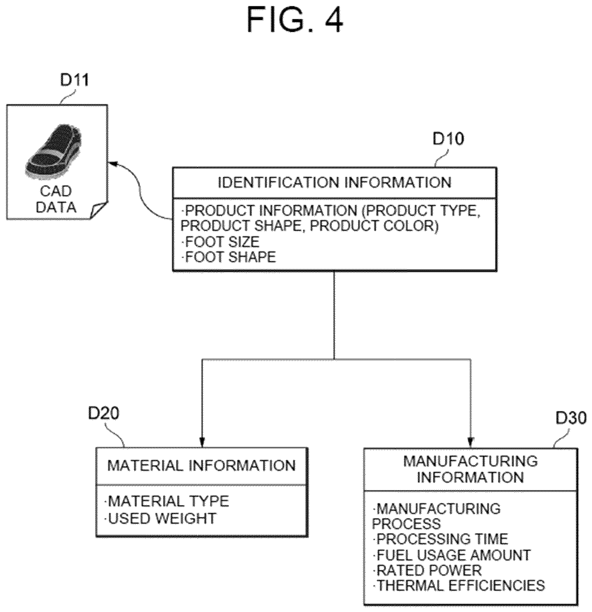

FIG. 4 is a diagram schematically illustrating an example of a database in which various types of information necessary for manufacturing footwear are stored. As illustrated in FIG. 4, identification information D10, material information D20, and manufacturing information D30 are stored in association with one another in the database.

For example, the footwear desired by the user is specified based on the product information (product type, product shape, product color, and the like) and the foot size and foot shape of the user included in the user information U10. The footwear is managed by identification information. The identification information may include or be associated with the CAD data D11 of the footwear. When the product is footwear, the identification information may include identification information for a left foot and identification information for a right foot.

Specifically, among the products (the footwear, the insole, and the like), the products for the left foot (the footwear, the insole, and the like) are associated with the identification information for the left foot, and the products for the right foot (the footwear, the insole, and the like) are associated with the identification information for the right foot.

The right foot and the left foot of a user naturally have different shapes; however, the shapes are not necessarily symmetrical. For example, the right foot and the left foot of a user may have different sizes (lengths and widths), may be used for different sports, or may have different characteristics depending on the way of walking. In the case of a custom-made product (footwear, insole, or the like), the right and left products are manufactured to fit the right and left feet, respectively. That is, different identification information may be assigned to each of the left and right products according to such a user.

In addition, one piece of identification information may be assigned so that the right and left products are managed as one pair.

As discussed above, left and right products (such as footwear and insoles) are manufactured for the left and right feet, respectively. In addition, one piece of identification information may be configured by combining marks assigned to right and left products (footwear, insole, and the like). That is, the mark for the left foot assigned to the product for the left foot (footwear, insole, or the like) and the mark for the right foot assigned to the product for the right foot (footwear, insole, or the like) are formed as one pair. Here, one pair may constitute one piece of identification information either by combining the mark for the left foot and the mark for the right foot and confirming matching of the shapes of the connection portions, or by confirming matching of the colors, patterns, and the like, in the connection portions. Further, one piece of identification information may be configured by a conceptual connection based on the contents described in the mark for the left foot and the mark for the right foot.

The material information D20 includes material types and used weights of the footwear, and the manufacturing information D30 includes manufacturing processes, processing times, fuel usage amounts, rated power and thermal efficiencies, past factory-performance-based power consumption amounts (for example, annual power consumption amounts), and actual number of products manufactured (defective products are excluded). That is, the storage unit 110 stores, for each type of footwear to be manufactured, product information, material types and used weights corresponding to the foot sizes and foot shapes, as material information D20, and manufacturing processes (including manufacturing factories, manufacturing machines, manufacturing methods, and the like), processing times, fuel usage amounts, rated powers, thermal efficiencies, and the like, in the manufacturing processes as manufacturing information D30. The used weight is obtained by subtracting the remaining amount from the input weight of the material, and includes the weight loss during the process.

The prediction information generation unit 120 generates prediction information including material prediction information related to a material of the footwear generated in relation to manufacturing of the footwear corresponding to the identification information D10 and manufacturing prediction information related to manufacturing of the footwear, based on the material information D20 and the manufacturing information D30.

For example, the prediction information generation unit 120 specifies the footwear (product information (product type, product shape, product color, and the like), foot size, and foot shape) desired by the user based on the identification information D10. Based on the material information D20 and the manufacturing information D30, the prediction information generation unit 120 generates materials (material types and used weights) (material prediction information) necessary for manufacturing the specified footwear, and manufacturing processes, processing times, fuel usage amounts, rated powers, thermal efficiencies, past factory-performance-based power consumption amounts (for example, annual power consumption amounts), and actual number of products manufactured (defective products are excluded) (manufacturing prediction information) necessary for manufacturing the footwear.

As described above, the prediction information generation unit 120 generates the material prediction information and the manufacturing prediction information generated in relation to manufacturing of the footwear desired by the user.

Based on the prediction information including the material prediction information and the manufacturing prediction information generated by the prediction information generation unit 120, the environmental indicator calculation unit 130 calculates an environmental indicator (first environmental indicator) related to the environmental impact related to the footwear desired by the user.

For example, the environmental indicator calculation unit 130 calculates the amount of carbon dioxide emissions (material) using the above-described (Expression 1), based on the material prediction information generated in relation to manufacturing of the footwear desired by the user.

Similarly, the environmental indicator calculation unit 130 calculates the amount of carbon dioxide emissions (manufacturing) using the above-described (Expression 2), based on the manufacturing prediction information generated in relation to manufacturing of the footwear desired by the user.

Then, the environmental indicator calculation unit 130 calculates the amount of carbon dioxide emissions resulting from manufacturing the footwear desired by the user (including use of materials), based on the amount of carbon dioxide emissions (material) and the amount of carbon dioxide emissions (manufacturing).

Here, the above-described (Expression 1) and (Expression 2), each emission intensity necessary for calculating the amount of carbon dioxide emissions used as the environmental indicator evaluating the environmental impact, and the like, may be stored in the storage unit 110, or the like, in advance.

The output unit 140 outputs the amount of carbon dioxide emissions (first environmental indicator) calculated by the environmental indicator calculation unit 130.

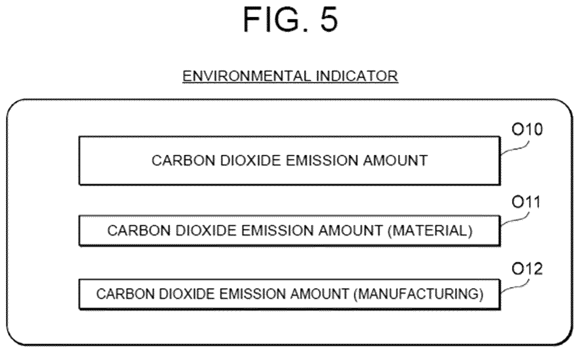

FIG. 5 is a diagram illustrating an example in which the amount of carbon dioxide emissions resulting when the footwear is manufactured (including use of materials) is output as the environmental indicator. As illustrated in FIG. 5, an amount of carbon dioxide emissions O10, an amount of carbon dioxide emissions (material) O11, and an amount of carbon dioxide emissions (manufacturing) O12 are displayed.

The amount of carbon dioxide emissions (material) O11 indicates, for the footwear desired by the user, the amount of carbon dioxide emissions related to the material of the footwear in the life cycle of the product illustrated in FIG. 1.

The amount of carbon dioxide emissions (manufacturing) O12 indicates the amount of carbon dioxide emissions related to the manufacturing of the footwear in the life cycle of the product illustrated in FIG. 1, for the footwear desired by the user.

The amount of carbon dioxide emissions O10 is the sum of the amount of carbon dioxide emissions (material) O11 and the amount of carbon dioxide emissions (manufacturing) 012, and indicates about how much carbon dioxide is emitted when the footwear desired by the user is manufactured (including use of materials).

For example, the server apparatus 100 may output the amount of carbon dioxide emissions O10, the amount of carbon dioxide emissions (material) O11, and the amount of carbon dioxide emissions (manufacturing) O12 illustrated in FIG. 5, display them on the screen of the terminal 11, and present them to the user.

Accordingly, the user can know about how much carbon dioxide is emitted when the desired footwear is manufactured (including use of materials), before the desired footwear is manufactured. As a result, the purchasing motivation of the user can be affected, and for example, a user who is keen about environmental issues can order footwear with low amount of carbon dioxide emissions.

In addition, amount of carbon dioxide emissions associated with the transport, use, and disposal of footwear during the life cycle of the product illustrated in FIG. 1 may be considered.

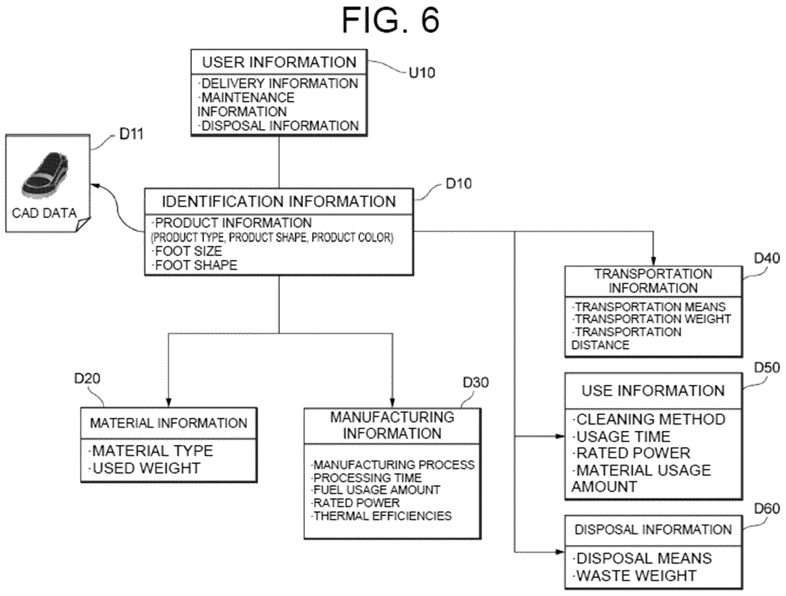

FIG. 6 is a diagram schematically illustrating an example of a database in which various pieces of information necessary for considering the environmental impact related to the footwear in the life cycle from the manufacturing (including use of materials) to the disposal of the footwear are stored. As illustrated in FIG. 6, in addition to the identification information D10, and the material information D20 and the manufacturing information D30 described with reference to FIG. 4, transportation information D40, use information D50, and disposal information D60 are stored in association with one another in the database.

The footwear desired by the user is managed by identification information, and in addition, the identification information may be associated with each piece of information included in the user information U10. Specifically, the identification information may be associated with delivery information (delivery address, delivery means, delivery due date, and the like), maintenance information (cleaning method, cleaning frequency, repair method, and storage method), disposal information (disposal method), and the like, of the footwear desired by the user, which are included in the user information U10.

The transportation information D40 includes transportation means, transportation weight, and transportation distance; the use information D50 includes a cleaning method, usage time, rated power, and material usage amount; and the disposal information D60 includes disposal means and waste weight. That is, the transportation means, transportation weights, and transportation distances corresponding to the delivery information (delivery address, delivery means, delivery due date, and the like) are stored as the transportation information D40 in the storage unit 110 for each piece of footwear to be delivered. Further, the storage unit 110 stores, for each piece of footwear to be maintained, a cleaning method, a usage time, rated power, a material usage amount, a usage amount of a repair material (thread, tape, adhesive material, or the like), a usage amount of a storage product (moisture absorbers, a deodorant spray, or the like), and the like, according to maintenance information (a cleaning method, a cleaning frequency, a repair method, and a storage method) as use information D50. In addition, the storage unit 110 stores disposal means and waste weights corresponding to the disposal information (disposal method), as disposal information D60 for each piece of footwear to be disposed of.

The prediction information generation unit 120 generates transportation prediction information related to transportation of the footwear caused by delivering the footwear corresponding to the identification information D10, based on the transportation information D40. The prediction information generation unit 120 generates, based on the use information D50, use prediction information related to the use of the footwear caused by the maintenance of the footwear corresponding to the identification information D10. The prediction information generation unit 120 generates disposal prediction information related to the disposal of the footwear which is caused by the disposal of the footwear corresponding to the identification information D10, based on the disposal information D60.

For example, based on the identification information D10 and the delivery information included in the user information U10 associated with the identification information D10, the prediction information generation unit 120 generates transportation means, transportation weights, and transportation distances (transportation prediction information) necessary for transporting the footwear desired by the user, based on the transportation information D40. Based on the identification information D10 and the maintenance information included in the user information U10 associated with the identification information D10, the prediction information generation unit 120 generates a cleaning method, usage time, rated power, water usage amount, usage amount of repair material (thread, tape, adhesive material, or the like), usage amount of storage product (moisture absorbers, deodorant spray, or the like), and the like (use prediction information) necessary for maintaining footwear desired by the user, based on the use information D50. Based on the identification information D10 and the disposal information included in the user information U10 associated with the identification information D10, the prediction information generation unit 120 generates a disposal means and a waste weight (disposal prediction information) necessary for disposing of the footwear desired by the user, based on the disposal information D60.

As described above, the prediction information generation unit 120 generates prediction information including at least one or more of the transportation prediction information, the use prediction information, and the disposal prediction information generated by transportation, maintaining, and disposing of the footwear desired by the user, in addition to the material prediction information and the manufacturing prediction information.

The environmental indicator calculation unit 130 calculates an environmental indicator (first environmental indicator) related to the environmental impact related to the footwear desired by the user, based on the prediction information including at least one or more of the transportation prediction information, the use prediction information, and the disposal prediction information, in addition to the material prediction information and the manufacturing prediction information, which have been generated by the prediction information generation unit 120.

For example, the environmental indicator calculation unit 130 calculates the amount of carbon dioxide emissions (transportation) using the above-described (Expression 3), based on the transportation prediction information generated by transporting the footwear desired by the user.

Similarly, the environmental indicator calculation unit 130 calculates the amount of carbon dioxide emissions (use) using the above-described (Expression 4), based on the use prediction information generated by the maintenance of the footwear desired by the user.

Similarly, the environmental indicator calculation unit 130 calculates the amount of carbon dioxide emissions (disposal) by using the above-described (Expression 5), based on the disposal prediction information generated by disposing of the footwear desired by the user.

Then, the environmental indicator calculation unit 130 calculates the amount of carbon dioxide emissions resulting in the life cycle of the footwear desired by the user, based on the prediction information including at least one or more of the amount of carbon dioxide emissions (transportation), the amount of carbon dioxide emissions (use), and the amount of carbon dioxide emissions (disposal), in addition to the amount of carbon dioxide emissions (material) and the amount of carbon dioxide emissions (manufacture).

Here, the above-described (Expression 3) to (Expression 5) and each emission intensity necessary for calculating the amount of carbon dioxide emissions used as the environmental indicator evaluating the environmental impact may be stored in the storage unit 110, or the like, in advance.

The output unit 140 outputs the amount of carbon dioxide emissions (first environmental indicator) calculated by the environmental indicator calculation unit 130.

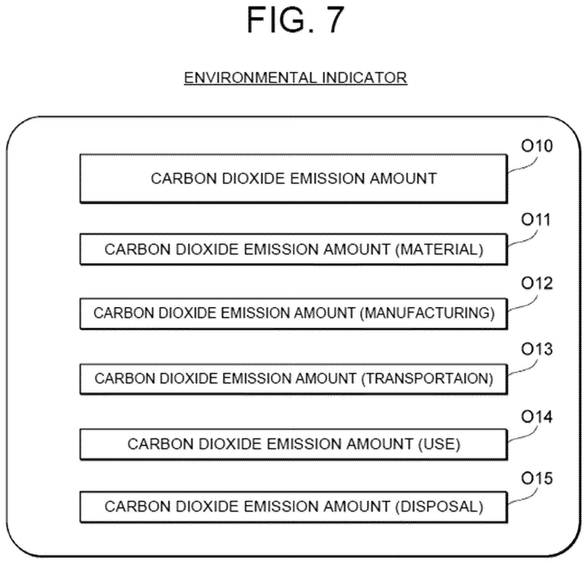

FIG. 7 is a diagram illustrating an example in which the amount of carbon dioxide emissions in the life cycle from the manufacturing (including use of materials) to the disposal of footwear is output as an environmental indicator. As illustrated in FIG. 7, in addition to the amount of carbon dioxide emissions O10, the amount of carbon dioxide emissions (material) O11, and the amount of carbon dioxide emissions (manufacturing) O12 described with reference to FIG. 5, an amount of carbon dioxide emissions (transportation) 013, an amount of carbon dioxide emissions (use) 014, and an amount of carbon dioxide emissions (disposal) O15 are displayed.

The amount of carbon dioxide emissions (transportation) O13 indicates, for the footwear desired by the user, the amount of carbon dioxide emissions related to transportation of the footwear in the life cycle of the product illustrated in FIG. 1.

The amount of carbon dioxide emissions (use) O14 indicates, for the footwear desired by the user, the amount of carbon dioxide emissions related to the use of the footwear in the life cycle of the product illustrated in FIG. 1.

The amount of carbon dioxide emissions (disposal) O15 indicates, for the footwear desired by the user, the amount of carbon dioxide emissions related to the disposing of the footwear in the life cycle of the product illustrated in FIG. 1.

The amount of carbon dioxide emissions O10 is the sum of the amount of carbon dioxide emissions (material) O11, the amount of carbon dioxide emissions (manufacturing) 012, the amount of carbon dioxide emissions (transportation) 013, the amount of carbon dioxide emissions (use) 014, and the amount of carbon dioxide emissions (disposal) O15, and indicates about how much carbon dioxide is emitted in the life cycle of the footwear desired by the user.

For example, the server apparatus 100 may output the amount of carbon dioxide emissions O10, the amount of carbon dioxide emissions (material) O11, the amount of carbon dioxide emissions (manufacturing) O12, the amount of carbon dioxide emissions (transportation) O13, the amount of carbon dioxide emissions (use) 014, and the amount of carbon dioxide emissions (disposal) O15 illustrated in FIG. 7, display them on the screen of the terminal 11, and present them to the user.

Accordingly, the user can know about how much carbon dioxide is emitted from the time when the desired footwear is manufactured (including use of materials) to the time when the footwear is transported, used (maintained), and disposed of, before the desired footwear is manufactured. As a result, the purchasing motivation of the user can be affected, and for example, a user who is keen about environmental issues can order footwear with low amount of carbon dioxide emissions. Further, the user can be aware of the reduction of the amount of carbon dioxide emissions by the delivery means and the delivery due date, the cleaning method, the cleaning frequency, the repair method, and the storage method, the disposal method, and the like.

[Environmental impact evaluation method]

Next, an environmental impact evaluation method evaluating the environmental impact related to the footwear (product) will be specifically described in detail.

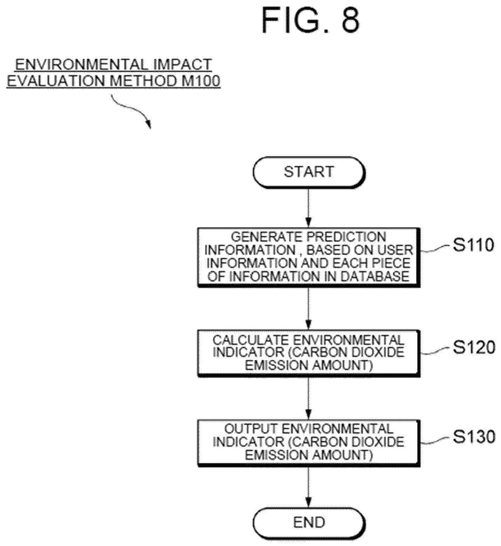

FIG. 8 is a flowchart illustrating a flow of processing of the environmental impact evaluation method M100 executed by the environmental impact evaluation system 10 according to the first embodiment of the present disclosure. As illustrated in FIG. 8, the environmental impact evaluation method M100 includes steps S110 to S130, and each step is executed by, for example, a processor, or the like, included in the server apparatus 100.

In step S110, the prediction information generation unit 120 generates prediction information, based on the user information and each piece of information in the database. Specifically, the prediction information generation unit 120 generates prediction information including the material prediction information and the manufacturing prediction information corresponding to the footwear desired by the user, and at least one or more of the transportation prediction information, the use prediction information, and the disposal prediction information, based on the identification information illustrated in FIGs. 4 and 6 and each piece of information associated with the identification information stored in the storage unit 110.

In step S120, the environmental indicator calculation unit 130 calculates the environmental indicator (amount of carbon dioxide emissions), based on the prediction information generated in step S110. Specifically, the environmental indicator calculation unit 130 calculates the amount of carbon dioxide emissions (first environmental indicator) by using the above-described (Expression 1) to (Expression 5), based on the prediction information generated in step S110.

In step S130, the output unit 140 outputs the environmental indicator (amount of carbon dioxide emissions). Specifically, the output unit 140 outputs the amount of carbon dioxide emissions (the first environmental indicator) calculated in step S120. The output unit 140 may present the amount of carbon dioxide emissions (first environmental indicator) to the user by displaying the amount of carbon dioxide emissions on the screen of the terminal 11 as illustrated in FIGs. 5 and 7.

[Effects of first embodiment]

In the environmental impact evaluation system 10 and the environmental impact evaluation method M100 according to the first embodiment of the present disclosure, the storage unit 110 stores the identification information D10, the material information D20, and the manufacturing information D30, and the prediction information generation unit 120 generates the material prediction information and the manufacturing prediction information of the footwear generated in relation to manufacturing of the footwear (product) corresponding to the identification information D10, based on the material information D20 and the manufacturing information D30. Then, the environmental indicator calculation unit 130 calculates the amount of carbon dioxide emissions (first environmental indicator), based on the material prediction information and the manufacturing prediction information, and the output unit 140 outputs the amount of carbon dioxide emissions (first environmental indicator). As a result, it is possible to appropriately evaluate the amount of carbon dioxide emissions related to the footwear (product) desired by the user in accordance with the circumstances for each pair of the footwear.

Conventionally, the amount of carbon dioxide emissions related to a product has been, for example, calculated by using the average size of each product, as a representative example.

In contrast, in the environmental impact evaluation system 10 and the environmental impact evaluation method M100 according to the first embodiment of the present disclosure, as described above, the amount of carbon dioxide emissions related to a product can be appropriately calculated according to individual circumstances (product type, product shape, color, size, and the like) of the footwear (product) desired by the user.

In particular, since footwear has a plurality of parts and fine-grained size variations, it is effective to accurately calculate the amount of carbon dioxide emissions in accordance with individual circumstances rather than simply calculating the amount of carbon dioxide emissions as a representative example. This is more effective for footwear (product) manufactured by made-to-order options such as by customizing the appearance, or the like.

Further, the storage unit 110 further stores transportation information D40, use information D50, and disposal information D60, and the prediction information generation unit 120 generates transportation prediction information of the footwear generated by transporting the footwear corresponding to the identification information D10, use prediction information of the footwear generated by using the footwear, and disposal prediction information of the footwear generated by disposing of the footwear, based on the transportation information D40, the use information D50, and the disposal information D60. Then, the environmental indicator calculation unit 130 calculates the amount of carbon dioxide emissions (first environmental indicator), based on the transportation prediction information, the use prediction information, and the disposal prediction information, and the output unit 140 outputs the amount of carbon dioxide emissions (first environmental indicator). As a result, it is possible to appropriately evaluate the amount of carbon dioxide emissions related to footwear desired by the user according to the circumstances for each piece of footwear from the time when the footwear is manufactured (including use of materials) to the time when the footwear is transported, used (maintained), and disposed of.

<Second Embodiment>

Next, in a second embodiment of the present disclosure, an environmental impact evaluation system that calculates an environmental indicator by using operational record information in a factory that manufactures footwear (product) will be described, in addition to the environmental impact evaluation system 10 described in the first embodiment.

[Configuration of environmental impact evaluation system]

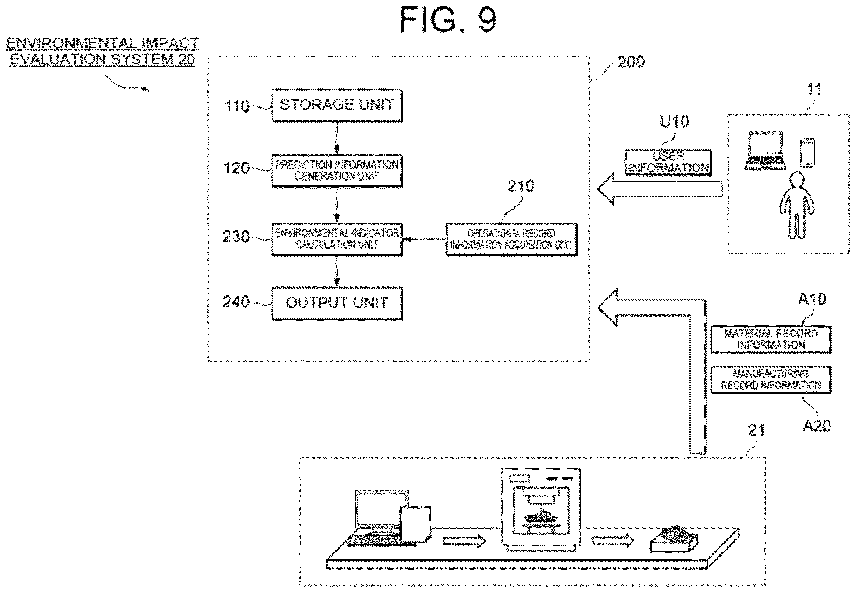

FIG. 9 is a system schematic diagram illustrating an environmental impact evaluation system 20 according to the second embodiment of the present disclosure. In FIG. 9, the same constituting elements as those of the environmental impact evaluation system 10 according to the first embodiment of the present disclosure illustrated in FIG. 2 are denoted by the same reference numerals, and detailed description thereof will be omitted. In the present embodiment, configurations different from those of the first embodiment of the present disclosure will be mainly described.

As illustrated in FIG. 9, the environmental impact evaluation system 20 includes a server apparatus 200 and a terminal 11. The server apparatus 200 includes a storage unit 110, a prediction information generation unit 120, an operational record information acquisition unit 210, an environmental indicator calculation unit 230, and an output unit 240. Further, the server apparatus 200 may acquire the user information U10 from the terminal 11, acquire the material record information A10 and the manufacturing record information A20 from the factory 21 that manufactures the footwear (product), and output the environmental indicators to the terminal 11.

The operational record information acquisition unit 210 acquires material record information A10 related to the material of the footwear (actual manufactured product) manufactured as a result of actual manufacturing of the footwear (product) desired by the user in the factory 21, and manufacturing record information A20 related to the manufacturing of the manufactured footwear (actual manufactured product).

For example, the operational record information acquisition unit 210 may acquire the weight data of the footwear by measuring the weight of the manufactured footwear (actual manufactured product), or may acquire the used weights of the respective materials by measuring the remaining amounts (tank weights in the 3D printer) of the respective materials before and after the manufacturing of the footwear (material record information A10).

The operational record information acquisition unit 210 may acquire the processing time and power consumption spent in manufacturing the footwear by actually measuring (acquiring information by various sensors (including weight, time, commodity power, and time measurement utilizing a foot stamp by photographing, or the like)), or, when there is actually spent fuel, may acquire the fuel usage amount and thermal efficiencies by measuring the remaining amount before and after manufacturing the footwear, or the like (manufacturing record information A20).

For example, in a case where the factory 21 operates using renewable energy, the operational record information acquisition unit 210 may acquire the power consumption amount, based on the power generation amount data from the solar panel in a period in which the footwear is manufactured.

The environmental indicator calculation unit 230 calculates an environmental indicator (second environmental indicator) related to the environmental impact related to the manufactured footwear (actual manufactured product), based on the operational record information including the material record information A10 and the manufacturing record information A20 acquired by the operational record information acquisition unit 210.

For example, the environmental indicator calculation unit 230 calculates the amount of carbon dioxide emissions (material) by using the above-described (Expression 1), based on the material record information A10 generated by actually manufacturing the footwear (product) desired by the user in the factory 21.

Similarly, the environmental indicator calculation unit 230 calculates the amount of carbon dioxide emissions (manufacturing) by using the above-described (Expression 2), based on the manufacturing record information A20 generated by actually manufacturing the footwear (product) desired by the user in the factory 21.

Then, based on the amount of carbon dioxide emissions (material) and the amount of carbon dioxide emissions (manufacture), the environmental indicator calculation unit 230 calculates the amount of carbon dioxide emissions resulting from actually manufacturing the footwear desired by the user (including use of materials).

The output unit 240 outputs the amount of carbon dioxide emissions (second environmental indicator) calculated by the environmental indicator calculation unit 230 together with the amount of carbon dioxide emissions (first environmental indicator) output by the output unit 140 or so as to update the amount of carbon dioxide emissions (first environmental indicator).

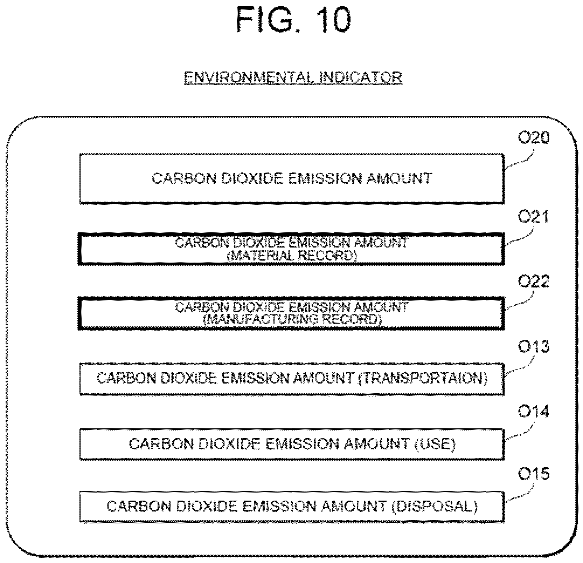

FIG. 10 is a diagram illustrating an example in which an amount of carbon dioxide emissions (including material record and manufacturing record) resulting in the life cycle from manufacturing (including use of materials) to disposal of footwear is output as an environmental indicator. As illustrated in FIG. 10, an amount of carbon dioxide emissions (material record) O21 and an amount of carbon dioxide emissions (manufacturing record) O22 are displayed, instead of the amount of carbon dioxide emissions (material) O11 and the amount of carbon dioxide emissions (manufacturing) O12 as described with reference to FIGs. 5 and 7.

The amount of carbon dioxide emissions (material) O11 and the amount of carbon dioxide emissions (manufacturing) 012 described with reference to FIG. 5 are predicted values calculated based on each piece of information stored in the storage unit 110 before the footwear desired by the user is manufactured. On the other hand, the amount of carbon dioxide emissions (material record) O21 and the amount of carbon dioxide emissions (manufacturing record) O22 are actual values calculated based on each piece of information when the footwear desired by the user is actually manufactured in the factory 21.

The amount of carbon dioxide emissions O20 is the sum of an amount of carbon dioxide emissions (material record) O21, an amount of carbon dioxide emissions (manufacturing record) O22, an amount of carbon dioxide emissions (transportation) 013, an amount of carbon dioxide emissions (use) 014, and an amount of carbon dioxide emissions (disposal) O15, and indicates about how much carbon dioxide is emitted in the life cycle of the footwear desired by the user, based on the actual value in the factory 21.

For example, the server apparatus 200 may output the amount of carbon dioxide emissions O20, the amount of carbon dioxide emissions (material record) O21, the amount of carbon dioxide emissions (manufacturing record) O22, the amount of carbon dioxide emissions (transportation) O13, the amount of carbon dioxide emissions (use) 014, and the amount of carbon dioxide emissions (disposal) O15 illustrated in FIG. 10, display them on the screen of the terminal 11, and present them to the user.

As a result, the user can understand about how much carbon dioxide is emitted from the time when the desired footwear is manufactured (including use of materials) to the time when the footwear is transported, used (maintained), and disposed of, in consideration of the actual values in the factory 21 when the desired footwear is actually manufactured. As a result, the user can understand the amount of carbon dioxide emissions resulting from actually manufacturing the desired footwear (including use of material), and then be conscious of the reduction of the amount of carbon dioxide emissions by the delivery means and the delivery due date, the cleaning method, the cleaning frequency, the repair method, and the storage method, the disposal method, and the like.

In the present embodiment, the output unit 240 outputs the amount of carbon dioxide emissions (material record) O21 and the amount of carbon dioxide emissions (manufacturing record) O22 instead of the amount of carbon dioxide emissions (material) O11 and the amount of carbon dioxide emissions (manufacturing) O12, however, may output both groups. For example, the user can compare the predicted value and the actual value by checking both groups.

Further, in the present embodiment, the environmental indicator calculation unit 230 calculates the amount of carbon dioxide emissions (material record) and the amount of carbon dioxide emissions (manufacturing record), based on the material record information A10 and the manufacturing record information A20, and the output unit 240 outputs them. For example, when the environmental indicator calculation unit 230 calculates one of the amount of carbon dioxide emissions (material record) and the amount of carbon dioxide emissions (manufacturing record), based on one of the operational record information acquired by the operational record information acquisition unit 210, the output unit 240 may, on one hand, output the amount of carbon dioxide emissions based on the operational record information; and on the other hand, output the amount of carbon dioxide emissions (material) O11 or the amount of carbon dioxide emissions (manufacturing) O12 as described with reference to FIG. 5.

[Environmental impact evaluation method]

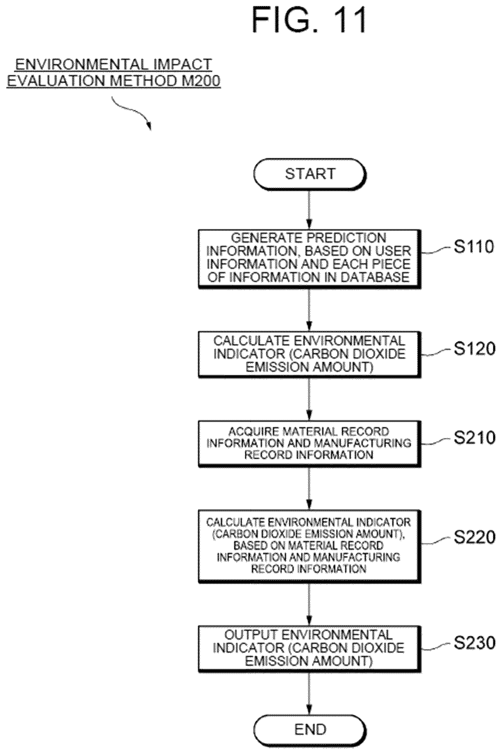

FIG. 11 is a flowchart illustrating a flow of processing of the environmental impact evaluation method M200 executed by the environmental impact evaluation system 20 according to the second embodiment of the present disclosure. As illustrated in FIG. 11, the environmental impact evaluation method M200 includes steps S110, S120, and steps S210 to S230, and each step is executed by, for example, a processor included in the server apparatus 200.
Step S110 and step S120 are the same as step S110 and step S120 in the environmental impact evaluation method M100 described with reference to FIG. 8.
In step S210, the operational record information acquisition unit 210 acquires material record information A10 and manufacturing record information A20. Specifically, the operational record information acquisition unit 210 acquires the material type and the weight used when the footwear is manufactured in the factory 21, and acquires the processing time and the power consumption consumed when the footwear is manufactured in the factory 21, and the fuel usage amount actually used and the thermal efficiencies.
In step S220, the environmental indicator calculation unit 230 calculates an environmental indicator (amount of carbon dioxide emissions), based on the material record information A10 and the manufacturing record information A20 acquired in step S210. Specifically, the environmental indicator calculation unit 230 calculates the amount of carbon dioxide emissions (second environmental indicator) by using the above-described (Expression 1) and (Expression 2), based on the material record information A10 and the manufacturing record information A20 acquired in step S210.
In step S230, the output unit 240 outputs the environmental indicator (amount of carbon dioxide emissions). Specifically, the output unit 240 outputs the amount of carbon dioxide emissions (second environmental indicator) calculated in step S220, together with the amount of carbon dioxide emissions (first environmental indicator) calculated in step S120 or instead of the amount of carbon dioxide emissions (first environmental indicator). The output unit 240 may present the amount of carbon dioxide emissions (second environmental indicator) to the user by displaying the amount of carbon dioxide emissions (second environmental indicator) on the screen of the terminal 11 as illustrated in FIG. 10, together with the amount of carbon dioxide emissions (first environmental indicator) or so as to update the amount of carbon dioxide emissions (first environmental indicator).

[Effects of second embodiment]

The environmental impact evaluation system 20 and the environmental impact evaluation method M200 according to the second embodiment of the present disclosure include the operational record information acquisition unit 210 in addition to the environmental impact evaluation system 10 according to the first embodiment of the present disclosure, and the operational record information acquisition unit 210 acquires the material record information A10 and the manufacturing record information A20 in the factory 21. Then, the environmental indicator calculation unit 230 calculates the amount of carbon dioxide emissions (second environmental indicator), based on the material record information A10 and the manufacturing record information A20, and the output unit 240 outputs the amount of carbon dioxide emissions (second environmental indicator), together with the amount of carbon dioxide emissions (first environmental indicator) or so as to update the amount of carbon dioxide emissions (first environmental indicator). As a result, it is possible to appropriately evaluate the amount of carbon dioxide emissions related to the footwear (product) desired by the user in accordance with the circumstances for each pair of the footwear and further in consideration of the amount of carbon dioxide emissions resulting when the desired footwear is actually manufactured (including use of materials).

<Third Embodiment>

Next, in a third embodiment of the present disclosure, in addition to the environmental impact evaluation system 20 described in the second embodiment, an environmental impact evaluation system that calculates an environmental indicator using operational record information of a user who uses footwear (product) will be described.

[Configuration of environmental impact evaluation system]

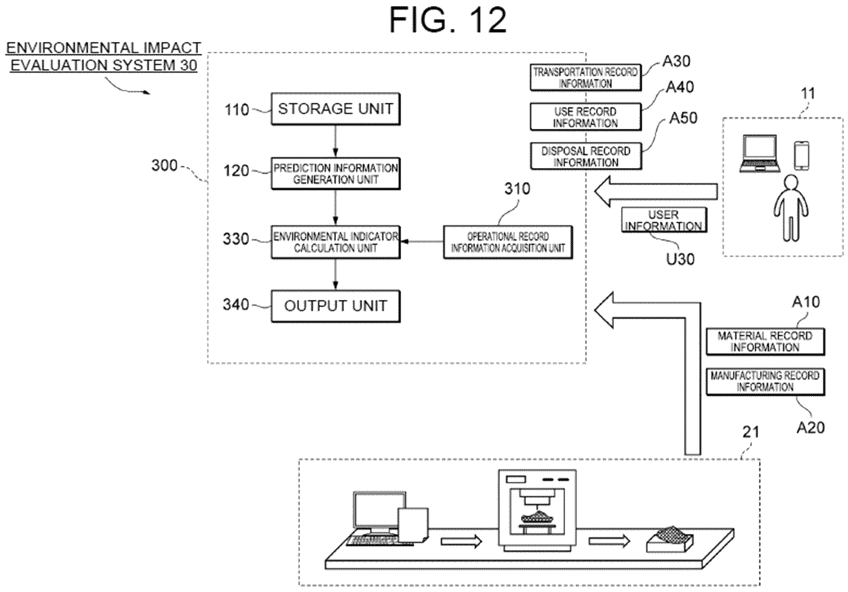

FIG. 12 is a system schematic diagram illustrating an environmental impact evaluation system 30 according to the third embodiment of the present disclosure. In FIG. 12, the same constituting elements as those of the environmental impact evaluation system 10 according to the first embodiment of the present disclosure illustrated in FIG. 2 and the environmental impact evaluation system 20 according to the second embodiment of the present disclosure illustrated in FIG. 9 are denoted by the same reference numerals, and detailed description thereof will be omitted. In the present embodiment, configurations different from those of the first embodiment and the second embodiment of the present disclosure will be mainly described.

As illustrated in FIG. 12, the environmental impact evaluation system 30 includes a server apparatus 300 and the terminal 11. The server apparatus 300 includes a storage unit 110, a prediction information generation unit 120, an operational record information acquisition unit 310, an environmental indicator calculation unit 330, and an output unit 340. The server apparatus 300 acquires the user information U30 from the terminal 11. The user information U30 includes delivery record information, maintenance record information, use record information, and disposal record information, corresponding to the delivery information, the maintenance information, the use information, and the disposal information in the user information U10.

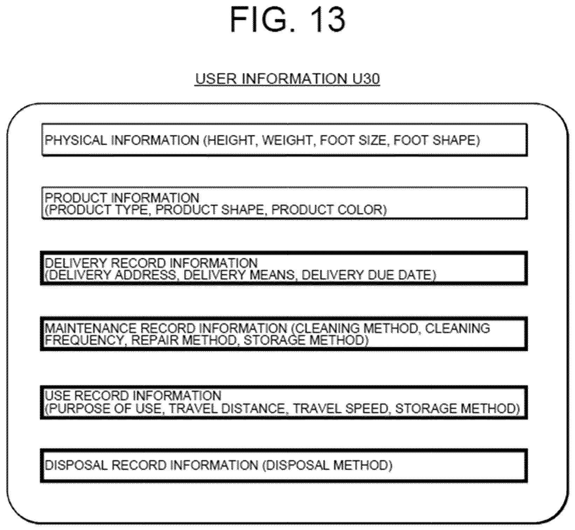

FIG. 13 is a diagram illustrating a specific example of the user information U30. As illustrated in FIG. 13, the user information U30 includes physical information, product information, delivery record information, maintenance record information, use record information, and disposal record information. The delivery record information, the maintenance record information, the use record information, and the disposal record information in the user information U30 illustrated in FIG. 13 are information resulting from actual delivery, maintenance, use, and disposal, as compared with the delivery information, the maintenance information, the use information, and the disposal information in the user information U10 illustrated in FIG. 3.

The delivery record information includes information related to a delivery address, a delivery means, a delivery due date, and the like, which concern the manufactured footwear (actual manufactured product) that has actually been delivered. For example, the delivery address, the delivery means, and the delivery due date may be input by the user using the terminal 11, or may be automatically set through a system of a delivery company. Here, fuel consumption (electricity, diesel, gasoline, or the like) required for the delivery may be set.

The maintenance record information includes information related to a cleaning method, a cleaning frequency, a repair method, and a storage method, and the like, in which the manufactured footwear (actual manufactured product) is actually maintained. For example, the cleaning method, the cleaning frequency, the repair method, and the storage method may be input by the user using the terminal 11. Here, the cleaning method may be a washing machine or hand washing, a dryer or sun-drying, and the like. The cleaning frequency may be counted every time the user performs cleaning, or may be the number of times of cleaning in a predetermined period. Examples of cleaning other than washing include deodorization by spraying. In the case of a textile product, the repair method includes embroidering repair, and the like, and also includes use of yarn materials, and the like. Further, the replacement of the sole also includes use of materials (tape and adhesive material) and addition related to power consumption due to processing. The storage method includes use of moisture absorbers, deodorant sprays, and the like.

The use record information includes information related to a purpose of use, a travel distance, a travel speed, a storage method, and the like, in which the manufactured footwear (actual manufactured product) is actually used. For example, the purpose of use, the travel distance, the travel speed, and the storage method may be input by the user using the terminal 11. Here, as the use record information, a travel history (travel distance, travel speed, and the like) at the time of wearing the footwear (actual manufactured product) may be extracted using a running application installed on a smartphone, or the like, of the user.

The disposal record information includes information related to a disposal method in which the manufactured footwear (actual manufactured product) is actually disposed of. For example, the disposal method may be input by the user using the terminal 11, such as standard disposal (according to municipal regulations), shop collection, or transfer to others.

The operational record information acquisition unit 310 acquires transportation record information A30 related to transportation concerning the footwear (product) desired by the user having been actually manufactured in the factory 21 and the manufactured footwear (actual manufactured product) having been delivered to a predetermined transportation destination.

The transportation record information A30 includes transportation means, transportation weight, and transportation distance acquired and calculated based on the delivery record information in the user information U30, the weight of the manufactured footwear (actual manufactured product), and each piece of information stored in the storage unit 110.

The operational record information acquisition unit 310 acquires use record information A40 related to the use of the manufactured footwear (actual manufactured product) and disposal record information A50 related to the disposal of the footwear (actual manufactured product).

The use record information A40 includes the maintenance record information in the user information U30, and further includes the cleaning method, the usage time, the rated power, the water usage amount, and the material usage amount in repair and storage, which are obtained and/or calculated based on the weight of the manufactured footwear (actual manufactured product) and each piece of information stored in the storage unit 110.

The disposal record information A50 includes disposal means and waste weight acquired and/or calculated based on the disposal record information in the user information U30, and further based on the weight of the manufactured footwear (actual manufactured product) and each piece of information stored in the storage unit 110.

The environmental indicator calculation unit 330 calculates an environmental indicator (second environmental indicator) related to the environmental impact related to the manufactured footwear (actual manufactured product), based on the operational record information including at least one or more of the transportation record information A30, the use record information A40, and the disposal record information A50 acquired by the operational record information acquisition unit 310.

For example, the environmental indicator calculation unit 330 calculates the amount of carbon dioxide emissions (transportation) by using the above-described (Expression 3), based on the transportation record information A30 generated by actually transporting the manufactured footwear (actual manufactured product).

Similarly, the environmental indicator calculation unit 330 calculates the amount of carbon dioxide emissions (use) by using the above-described (Expression 4), based on the use record information A40 generated by actually maintaining the manufactured footwear (actual manufactured product).

Similarly, the environmental indicator calculation unit 330 calculates the amount of carbon dioxide emissions (disposal) by using the above-described (Expression 5), based on disposal record information A50 generated by actually disposing of the manufactured footwear (actual manufactured product).

The output unit 340 outputs the amount of carbon dioxide emissions (second environmental indicator) calculated by the environmental indicator calculation unit 330, together with the amount of carbon dioxide emissions (first environmental indicator) output by the output unit 140 or so as to update the amount of carbon dioxide emissions (first environmental indicator).

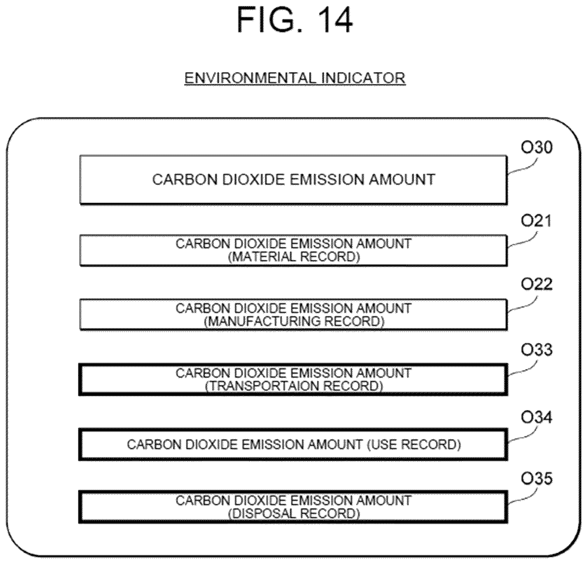

FIG. 14 is a diagram illustrating an example in which an amount of carbon dioxide emissions (including actual values for materials, manufacturing, transportation, use, and disposal) emitted in the life cycle from manufacturing (including use of materials) to disposal of footwear is output as an environmental indicator. As illustrated in FIG. 14, instead of the amount of carbon dioxide emissions (transportation) O13, the amount of carbon dioxide emissions (use) O14, and the amount of carbon dioxide emissions (disposal) O15 described with reference to FIGs. 7 and 10, an amount of carbon dioxide emissions (transportation record) O33, an amount of carbon dioxide emissions (use record) O34, and an amount of carbon dioxide emissions (delivery record) O35 are displayed.

The amount of carbon dioxide emissions (transportation) O13, the amount of carbon dioxide emissions (use) 014, and the amount of carbon dioxide emissions (disposal) O15 described with reference to FIG. 7 are predicted values calculated based on each piece of information stored in the user information U10 and the storage unit 110 before the footwear desired by the user is manufactured. On the other hand, the amount of carbon dioxide emissions (transportation record) O33, the amount of carbon dioxide emissions (use record) O34, and the amount of carbon dioxide emissions (delivery record) O35 are actual values calculated based on each piece of information when the manufactured footwear (actual manufactured product) is actually transported, maintained, and disposed of.

The amount of carbon dioxide emissions O30 is the sum of an amount of carbon dioxide emissions (material record) O21, an amount of carbon dioxide emissions (manufacturing record) O22, an amount of carbon dioxide emissions (transportation record) O33, an amount of carbon dioxide emissions (use record) O34, and an amount of carbon dioxide emissions (delivery record) O35, and indicates about how much carbon dioxide is emitted based on each actual value in the life cycle of the manufactured footwear (actual manufactured product).

For example, the server apparatus 300 may output the amount of carbon dioxide emissions O30, the amount of carbon dioxide emissions (material record) O21, the amount of carbon dioxide emissions (manufacturing record) O22, the amount of carbon dioxide emissions (transportation record) O33, the amount of carbon dioxide emissions (use record) O34, and the amount of carbon dioxide emissions (delivery record) O35 illustrated in FIG. 14, display them on the screen of the terminal 11, and present them to the user.

As a result, the user can appropriately understand about how much carbon dioxide is emitted from the time when the desired footwear is manufactured (including use of materials) to the time when the footwear is transported, used (maintained), and disposed of, based on the actual values in the life cycle.

Here, the output unit 340 outputs the amount of carbon dioxide emissions (transportation record) O33, the amount of carbon dioxide emissions (use record) O34, and the amount of carbon dioxide emissions (delivery record) O35, instead of the amount of carbon dioxide emissions (transportation) 013, the amount of carbon dioxide emissions (use) 014, and the amount of carbon dioxide emissions (disposal) 015, however, may output both groups. For example, the user can compare the predicted value and the actual value by checking both groups. As a result, the user can recognize that the amount of carbon dioxide emissions can be affected by the behavior change of the user.

Here, the environmental indicator calculation unit 330 calculates the amount of carbon dioxide emissions (transportation result), the amount of carbon dioxide emissions (use), and the amount of carbon dioxide emissions (delivery record), based on the transportation record information A30, the use record information A40, and the disposal record information A50, and the output unit 340 outputs them. For example, when the environmental indicator calculation unit 330 calculates at least one or more of the amount of carbon dioxide emissions (transportation record), the amount of carbon dioxide emissions (use), and the amount of carbon dioxide emissions (delivery record), based on at least one piece of operational record information acquired by the operational record information acquisition unit 310, the output unit 340 may output the amount of carbon dioxide emissions based on the calculated at least one piece of operational record information. In other cases, the environmental indicator calculation unit 330 may output the amount of carbon dioxide emissions (transportation) O13, the amount of carbon dioxide emissions (use) 014, and the amount of carbon dioxide emissions (disposal) O15 described with reference to FIG. 7.

[Environmental impact evaluation method]

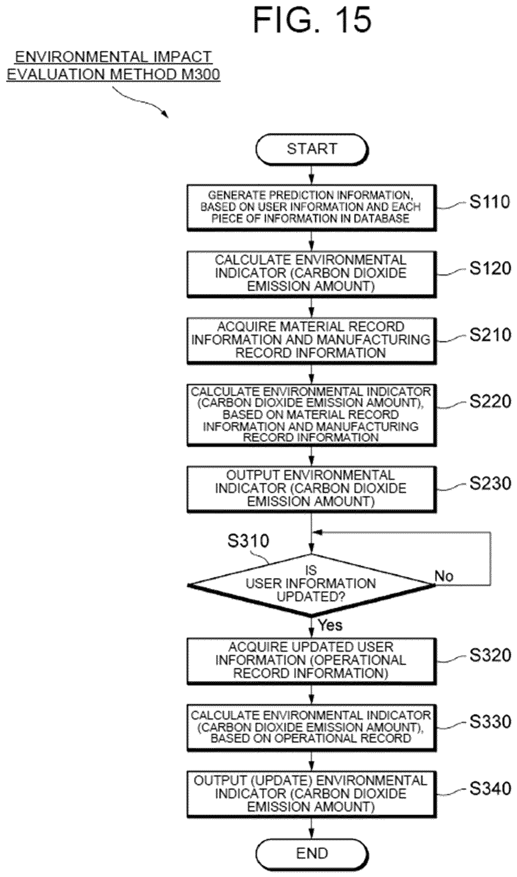

FIG. 15 is a flowchart illustrating a flow of processing of the environmental impact evaluation method M300 executed by the environmental impact evaluation system 30 according to the third embodiment of the present disclosure. As illustrated in FIG. 15, the environmental impact evaluation method M300 includes steps S110, S120, S210 to S230, and S310 to S340, and each step is executed by, for example, a processor, or the like, included in the server apparatus 300.
Step S110 and step S120 are the same as step S110 and step S120 in the environmental impact evaluation method M100 described with reference to FIG. 8.
Steps S210 to S230 are the same as steps S210 to S230 in the environmental impact evaluation method M200 described with reference to FIG. 11.
In step S310, the server apparatus 300 determines whether or not the user information has been updated, and in the case where the user information has been updated ("Yes" in step S310), the process proceeds to step S320. Specifically, when the delivery record information, the maintenance record information, and the disposal record information included in the user information U30 are input (updated) in the terminal 11, an EC site, and the system of the delivery company, the server apparatus 300 proceeds to the process of step S320.
In step S320, the operational record information acquisition unit 310 acquires updated user information (operational record information). Specifically, the operational record information acquisition unit 310 acquires the transportation record information A30, the use record information A40, and the disposal record information A50, based on the user information (operational record information) input (updated) in the terminal 11, an EC site, and the system of the delivery company.
In step S330, the environmental indicator calculation unit 330 calculates an environmental indicator (amount of carbon dioxide emissions), based on the transportation record information A30, the use record information A40, and the disposal record information A50 acquired in step S320. Specifically, the environmental indicator calculation unit 330 calculates the amount of carbon dioxide emissions (second environmental indicator) by using the above-described (Expression 3) to (Expression 5), based on the transportation record information A30, the use record information A40, and the disposal record information A50 acquired in step S320.
In step S340, the output unit 340 outputs (updates) the environmental indicator (amount of carbon dioxide emissions). Specifically, the output unit 340 outputs the amount of carbon dioxide emissions (the second environmental indicator) calculated in step S330, together with the amount of carbon dioxide emissions (the first environmental indicator and/or the second environmental indicator) output in step S230 or instead of the amount of carbon dioxide emissions (the first environmental indicator and/or the second environmental indicator). The output unit 340 may present the amount of carbon dioxide emissions (second environmental indicator) to the user by displaying the amount of carbon dioxide emissions (second environmental indicator) on the screen of the terminal 11 as illustrated in FIG. 14, together with the amount of carbon dioxide emissions (first environmental indicator) or so as to update the amount of carbon dioxide emissions (first environmental indicator).

[Effects of third embodiment]

The environmental impact evaluation system 30 and the environmental impact evaluation method M300 according to the third embodiment of the present disclosure include the operational record information acquisition unit 310 in addition to the environmental impact evaluation system 10 according to the first embodiment of the present disclosure, and the operational record information acquisition unit 310 acquires the transportation record information A30, the use record information A40, and the disposal record information A50 of the manufactured footwear (actual manufactured product). Then, the environmental indicator calculation unit 330 calculates the amount of carbon dioxide emissions (second environmental indicator), based on the transportation record information A30, the use record information A40, and the disposal record information A50, and the output unit 340 outputs the amount of carbon dioxide emissions (second environmental indicator), together with the amount of carbon dioxide emissions (first environmental indicator) or so as to update the amount of carbon dioxide emissions (first environmental indicator). As a result, the amount of carbon dioxide emissions related to the footwear (product) desired by the user can be appropriately evaluated in accordance with the circumstances for each pair of the footwear, and further in consideration of the amount of carbon dioxide emissions resulting when the desired footwear is actually manufactured (including use of materials) and actually transported, used, and disposed of.

<First Modification>

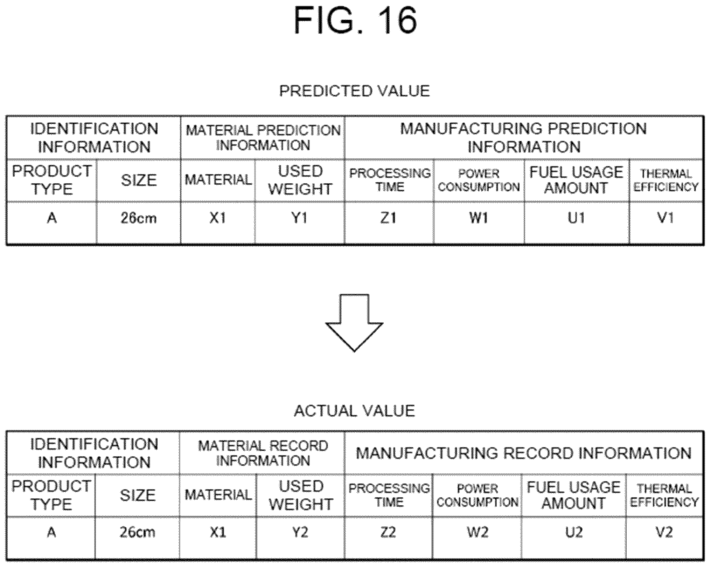

FIG. 16 is a diagram illustrating predicted values and actual values before and after manufacturing of the footwear (product) related to the material information and the manufacturing information of the footwear (product) desired by the user. As illustrated in FIG. 16, there is a difference between the material prediction information and the manufacturing prediction information before the footwear is manufactured, and the material record information and the manufacturing record information of the manufactured footwear.

The material prediction information is information including materials (material types and used weights) necessary for manufacturing the footwear desired by the user, and is generated by, for example, the prediction information generation unit 120 based on each piece of information stored in the storage unit 110. That is, the material prediction information is actually a predicted value before the footwear is manufactured.

The material record information is information including materials (material types and used weights) used for the manufactured footwear. That is, the material record information is an actual value of actually manufactured footwear, and differs from the material prediction information which is a predicted value.

The manufacturing prediction information is information including the processing time, the fuel usage amount, the rated power, and the thermal efficiencies necessary for manufacturing the footwear desired by the user, and is generated by the prediction information generation unit 120, based on each piece of information stored in the storage unit 110, for example. That is, the manufacturing prediction information is a predicted value before the footwear is actually manufactured.

The manufacturing record information is information including the processing time, the fuel usage amount, the rated power, and the thermal efficiencies consumed in manufacturing the footwear. That is, the manufacturing record information is the actual value of the actually manufactured footwear, and differs from the manufacturing prediction information which is the predicted value.

The environmental impact evaluation system according to the present disclosure may include a prediction model that is updated by learning a difference between the material prediction information and the material record information and a difference between the manufacturing prediction information and the manufacturing record information, or may be configured to be able to access the prediction model of an external system. Then, the prediction information generation unit 120 may generate the material prediction information and the manufacturing prediction information, by using the prediction model.

[Effects of first modification]

As described above, when the prediction model updated by learning the difference between the predicted value and the actual value is used, the accuracy of the material prediction information and the manufacturing prediction information generated by the prediction information generation unit 120 is improved. Since the environmental indicator calculation unit 130 calculates the amount of carbon dioxide emissions based on the material prediction information and the manufacturing prediction information generated by the prediction information generation unit 120, the accuracy of the calculated amount of carbon dioxide emissions is also improved. As a result, the user can understand the amount of carbon dioxide emissions calculated with high accuracy even before the footwear (product) is manufactured.

Here, the material information and the manufacturing information have been described as examples, however, the present invention is not limited thereto. For example, a prediction model updated by learning a difference between a predicted value and an actual value may be used for the transportation information, the use information, and the disposal information.

<Second Modification>

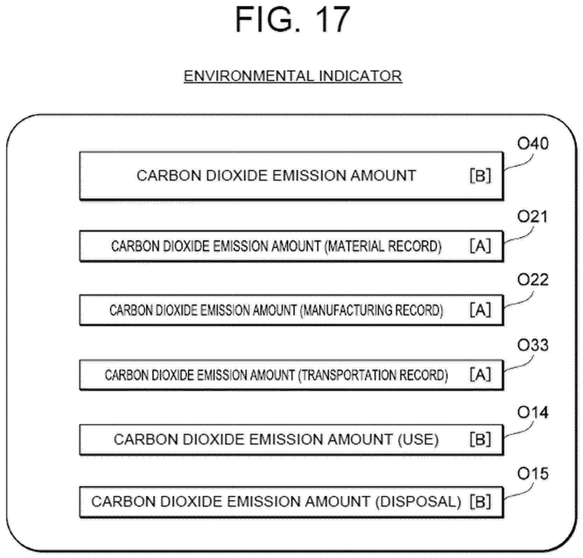

FIG. 17 is a diagram illustrating an example in which an amount of carbon dioxide emissions (grade assigned) emitted in the life cycle from manufacturing (including use of materials) to disposal of footwear is output as an environmental indicator. As illustrated in FIG. 17, grades are assigned to the amount of carbon dioxide emissions in each process in the life cycle of the footwear (product) and to the entire life cycle of the footwear (product). Here, the grade indicates reliability as an environmental indicator.

The environmental impact evaluation system according to the present disclosure may include a grade determination unit that determines a grade. Then, the grade determination unit may determine a grade indicating the reliability of the amount of carbon dioxide emissions calculated by the environmental indicator calculation units 130, 230, and 330.

For example, when the prediction information is generated by the prediction information generation unit 120 by using the prediction model, the grade determination unit may assign a high grade to the amount of carbon dioxide emissions calculated by the environmental indicator calculation unit 130, based on the prediction information, in accordance with the number of times the amount of carbon dioxide emissions is updated by the prediction model. Further, when calculating the amount of carbon dioxide emissions for the whole, the grade determination unit may assign a high grade in accordance with a ratio at which the operational record information acquired by the operational record information acquisition units 210 and 310 is used for the calculation of the amount of carbon dioxide emissions in each process. Alternatively, the emission intensity can be evaluated in the same manner. For example, the reliability can be further improved by using the emission intensity data based on the Life Cycle Assessment (LCA) result unique to each supplier, instead of the emission intensity data based on industry averages.

In FIG. 17, since the amount of carbon dioxide emissions (material record) O21, the amount of carbon dioxide emissions (manufacturing record) O22, and the amount of carbon dioxide emissions (transportation record) O33 are calculated using the operational record information, the grade determination unit assigns a high grade [A]. Although the amount of carbon dioxide emissions O40 includes the amount of carbon dioxide emissions (manufacturing record) O22 and the amount of carbon dioxide emissions (transportation record) O33 assigned with grade [A], they include the amount of carbon dioxide emissions (use) and the amount of carbon dioxide emissions (disposal) assigned with grade [B], and therefore, the grade determination unit assigns grade [B] to the amount of carbon dioxide emissions O40.

[Effects of second modification]

As described above, if the amount of carbon dioxide emissions calculated by the environmental indicator calculation units 130, 230, and 330 is graded and displayed on, for example, the screen of the terminal 11 to be presented to the user, the user can understand the reliability of the amount of carbon dioxide emissions in each process and in the entire life cycle of the footwear (product). Further, if the user inputs the operational record information, the grade of the amount of carbon dioxide emissions calculated based on the operational record information can be improved, which can be an element for causing the user to input the operational record information.

<Third Modification>

The environmental impact evaluation system according to the present disclosure may include a life prediction unit that predicts the life of the footwear (product). The environmental impact evaluation system according to the present disclosure has various pieces of information for calculating the amount of carbon dioxide emissions, and the life prediction unit may predict the life of the footwear (product) by using these pieces of information.

For example, the life prediction unit can predict the life of the footwear, based on the physical information (height, weight, foot size, and foot shape) and the product information (product type, product shape, and product color) included in the user information U10 illustrated in FIG. 3.

The life prediction unit can accurately predict the life of the footwear in consideration of the maintenance information (the cleaning method, the cleaning frequency, the repair method, and the storage method) and the use information (the purpose of use, the travel distance, the travel speed, and the storage method).

Further, the life prediction unit may update the predicted life of the footwear in consideration of operational record information from the user. For example, the life prediction unit can more accurately predict the life of the footwear, based on the maintenance record information (cleaning method, cleaning frequency, repair method, and storage method) and the use record information (purpose of use, travel distance, travel speed, and storage method) included in the user information U30 illustrated in FIG. 13.

[Effects of third modification]

As described above, if the life of the footwear (product) is presented to the user, the user can appropriately understand the timing of replacement of the footwear (product).

In addition, the predicted life of the footwear is updated by the operational record information from the user. As a result, the user can recognize that the life of the footwear (product) can be affected by the behavior change of the user. The environmental impact evaluation system according to the present disclosure may provide the user with an element capable of extending the life of the footwear (product).

Further, also as for the life of the footwear, a prediction model may be used which is updated by learning a predicted value generated immediately after the manufacture of the footwear, a predicted value (updated value) generated in consideration of operational record information from the user, and an actual value when the footwear is finally disposed of. Thus, the user can accurately understand the life of the footwear at an early stage after starting to use the footwear.

That is, accuracy is improved by performing machine learning using a regression model with a set of actual input/output data. For example, at the time of use, the user's input life and maintenance frequency (including cleaning) can be predicted, and environmental impact evaluation (including calculation of amount of carbon dioxide emissions) can be performed based on the prediction data. Further, when a new product is purchased, past actual data can be compared with prediction data related to each other by individual identification, and thus the accuracy is further improved.

[Summary of effects of the present disclosure]

According to the present disclosure, it is possible to appropriately evaluate the environmental impact related to a product desired by a user in accordance with the circumstances for each product by calculating the amount of carbon dioxide emissions in the life cycle of the product.

In each of the embodiments according to the present disclosure, the amount of carbon dioxide emissions is provided as an example of the environmental indicator (the first environmental indicator and the second environmental indicator), however, the present disclosure is not limited thereto. For example, the environmental indicator may be obtained based on at least one or more of amount of carbon dioxide emissions, impact on land and soil, fossil fuel usage, usage amount of minerals and metals, water usage amount, impact on freshwater ecosystem, amount of nutrient emissions to freshwater system, impact on acidification, amount of nutrient emissions to oceanic system, amount of nutrient emissions to terrestrial ecosystem, amount of photochemical ozone emissions, impact on respiratory system, amount of radioactive substance emissions, amount of carcinogen emissions, amount of emissions of non-carcinogenic toxic substances and poisonous substances, and impact on ozone layer depletion, which are described in Environmental Footprint (EF) 3.0 as indicators evaluating environmental burden of a product or corporate activity.

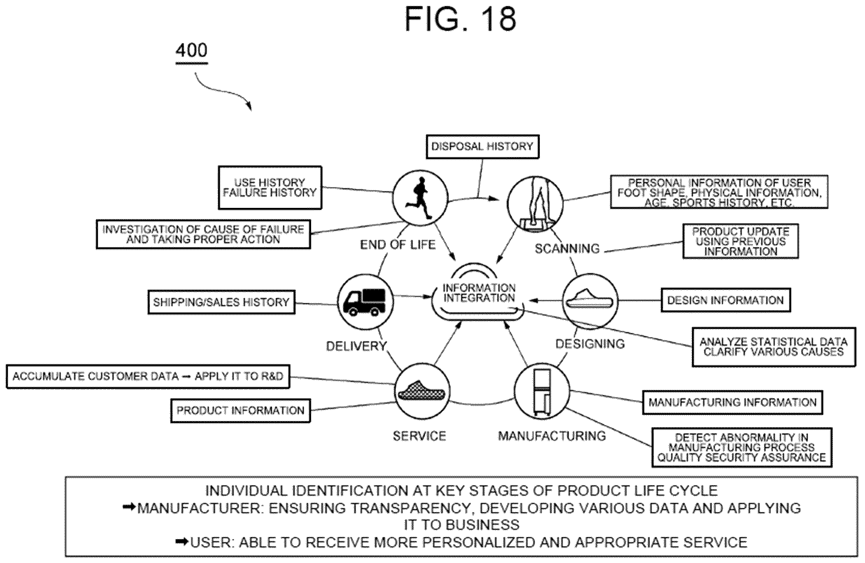

FIG. 18 is a diagram illustrating an overview of the product management system 400. The product management system 400 can integrally manage information related to manufacturing, sales, use, repair, and the like. Thus, manufacturers can secure the transparency of the process, and can perform development and business creation using various data. In addition, the user can enjoy services such as product purchase and after-sales service which are more suitable for individuals.

In addition, the product management system 400 according to the embodiment of the present disclosure can manage a manufacturer, or the like, of a product. Therefore, for example, it is possible to take measures against counterfeit products through their identification, or the like. For example, the administrator of the product management system 400 can determine, as a counterfeit product, a product that does not have identification information assigned to a genuine product, a product that has identification information different from that for a genuine product, or a product that cannot be associated with product management information for managing a genuine product.

[Aspects]

(1) An aspect of the present disclosure relates to an environmental impact evaluation system evaluating an environmental impact related to a product that is any of clothing, footwear, and accessories, the environmental impact evaluation system including: a storage unit that stores identification information for identifying the product, the identification information being associated with related information of the product corresponding to a user who uses the product, material information related to a material of the product, and manufacturing information related to manufacturing of the product; a prediction information generation unit that generates prediction information including: material prediction information related to a material of the product generated in relation to manufacturing of the product corresponding to the identification information; and manufacturing prediction information related to manufacturing of the product, based on the material information and the manufacturing information; an environmental indicator calculation unit that calculates a first environmental indicator related to the environmental impact related to the product, based on the prediction information including the material prediction information and the manufacturing prediction information; and an output unit that outputs the calculated first environmental indicator.

According to the environmental impact evaluation system of the above (1), the storage unit stores the identification information for identifying the product, the material information, and the manufacturing information, and the prediction information generation unit generates the material prediction information and the manufacturing prediction information of the product, based on the material information and the manufacturing information. The environmental indicator calculation unit calculates the first environmental indicator, based on the material prediction information and the manufacturing prediction information, and the output unit outputs the first environmental indicator. For example, the first environmental indicator output by the output unit is displayed on the screen of the user terminal, and thus the user can understand the environmental impact related to the desired product corresponding to the identification information. Thus, it is possible to appropriately evaluate the environmental impact related to the product desired by the user in accordance with the circumstances for each product.

(2) In the environmental impact evaluation system according to the above (2), the storage unit further stores at least one or more of transportation information related to transportation of the product, use information related to use of the product, and disposal information related to disposal of the product, and the prediction information generation unit generates prediction information including at least one or more of: transportation prediction information related to transportation, which is generated in relation to transportation of the product corresponding to the identification information; use prediction information related to use of the product, which is generated in relation to using of the product; and disposal prediction information related to disposal of the product, which is generated in relation to disposing of the product, based on at least one or more of the transportation information, the use information, and the disposal information, and the environmental indicator calculation unit calculates the first environmental indicator, based on the prediction information including at least one or more of the transportation prediction information, the use prediction information, and the disposal prediction information, in addition to the material prediction information and the manufacturing prediction information.

According to the environmental impact evaluation system of the above (2), the environmental indicator calculation unit calculates the first environmental indicator, based on the prediction information including at least one or more of the transportation prediction information, the use prediction information, and the disposal prediction information, in addition to the material prediction information and the manufacturing prediction information. As a result, it is possible to appropriately evaluate the environmental impact related to the product desired by the user according to the circumstances for each product, from the time when the product desired by the user is manufactured (including use of materials) to the time when the product is transported, used (maintained), and disposed of.

(3) The environmental impact evaluation system according to the above (1) or (2) further includes: an operational record information acquisition unit that acquires operational record information including at least one or more of material record information related to a material of an actual manufactured product resulting from manufacturing of the product and manufacturing record information related to manufacturing of the actual manufactured product, in which the environmental indicator calculation unit calculates a second environmental indicator related to the environmental impact related to the actual manufactured product, based on the operational record information including at least one or more of the material record information and the manufacturing record information, and the output unit outputs the calculated second environmental indicator together with the first environmental indicator or so as to update the first environmental indicator.

According to the environmental impact evaluation system of the above (3), the environmental indicator calculation unit calculates a second environmental indicator related to the environmental impact related to the actual manufactured product, based on the operational record information including at least one or more of the material record information and the manufacturing record information. As a result, it is possible to appropriately evaluate the environmental impact related to the product desired by the user in accordance with the circumstances for each product and further in consideration of the environmental impact due to the actual manufacturing (including use of materials) of the desired product.

(4) In the environmental impact evaluation system according to the above (3), the operational record information acquisition unit further acquires operational record information including transportation record information related to transportation by which the actual manufactured product is delivered to a predetermined transportation destination, and the environmental indicator calculation unit calculates the second environmental indicator, based on operational record information including the transportation record information, in addition to at least one or more of the material record information and the manufacturing record information, and the output unit outputs the calculated second environmental indicator together with the first environmental indicator or so as to update the first environmental indicator.

According to the environmental impact evaluation system of the above (4), the environmental indicator calculation unit calculates the second environmental indicator, based on the operational record information including the transportation record information in addition to at least one or more of the material record information and the manufacturing record information, and the output unit outputs the calculated second environmental indicator together with the first environmental indicator or so as to update the first environmental indicator. As a result, it is possible to appropriately evaluate the environmental impact related to the product desired by the user in accordance with the circumstances for each product and further in consideration of the environmental impact due to the transportation of the product.

(5) In the environmental impact evaluation system according to the above (3) or (4), the operational record information acquisition unit further acquires operational record information including at least one or more of use record information related to use of the actual manufactured product from a user who has used the actual manufactured product, and disposal record information related to disposal of the actual manufactured product from a user who has disposed of the actual manufactured product, the environmental indicator calculation unit calculates the second environmental indicator, based on operational record information including at least one or more of the use record information and the disposal record information, in addition to at least one or more of the material record information and the manufacturing record information, and the output unit outputs the calculated second environmental indicator together with the first environmental indicator or so as to update the first environmental indicator.

According to the environmental impact evaluation system of the above (5), the environmental indicator calculation unit calculates the second environmental indicator, based on the operational record information including at least one or more of the use record information and the disposal record information in addition to at least one or more of the material record information and the manufacturing record information, and the output unit outputs the calculated second environmental indicator together with the first environmental indicator or so as to update the first environmental indicator. As a result, it is possible to appropriately evaluate the environmental impact related to the product desired by the user in accordance with the circumstances for each product and further in consideration of the environmental impact due to the use and disposal of the product.

(6) The environmental impact evaluation system according to any one of the above (3) to (5) further includes: a prediction model that is updated by learning a difference between the prediction information and the operational record information, in which the prediction information generation unit generates the prediction information by using the prediction model.

According to the environmental impact evaluation system of the above (6), since the prediction information generation unit generates the prediction information by using the prediction model, the accuracy of the first environmental indicator calculated based on the prediction information is improved.

Thus, the user can understand the first environmental indicator calculated with high accuracy even before the product is manufactured.

(7) The environmental impact evaluation system according to the above (6) further includes: a grade determination unit that determines a grade indicating reliability of the first environmental indicator and/or the second environmental indicator presented to the user by the output unit, in which the grade determination unit assigns a high grade to the first environmental indicator calculated based on the prediction information generated by using the updated prediction model, in accordance with the number of times of the updating.

According to the environmental impact evaluation system of the above (7), the grade determination unit assigns a grade in accordance with the reliability of the first environmental indicator and/or the second environmental indicator. Thus, the user can understand the reliability of the first environmental indicator and/or the second environmental indicator, and can appropriately evaluate the environmental impact related to the product desired by the user in accordance with the circumstances for each product.

A two-dimensional code, or the like, which relates to the environmental indicator value, can be assigned to a product itself, a tag, a case, or the like, so that a user can confirm the data by using an application. Not only the environmental indicator value, but also information related to the country of manufacture, the raw material suppliers, and the manufacturing suppliers, the date of manufacture, the transportation route, and the like, may be confirmed via the two-dimensional code, or the like. For example, information related to such as the manufacturer, materials used, recyclability, and disassembly method is included to ensure traceability along the life cycle of the product, and information related to the sustainability and circular economy about the product is actually recorded through Digital Product Passport (DPP). Examples of the aforementioned information related to the sustainability and circular economy about the product include: where the raw material used in the product was mined, where it was processed, where it was made into a final product, and during the processes what transportation route and means are used to transport the product, how much carbon dioxide was emitted, how much recycled material was included, how much environmentally hazardous substances (SOC: Substances of Concern) was used, and what the repairability and durability are.

(8) The environmental impact evaluation system according to any one of the above (3) to (7) further includes: a grade determination unit that determines a grade indicating reliability of the first environmental indicator and/or the second environmental indicator presented to the user by the output unit, in which the grade determination unit assigns a high grade to the first environmental indicator and/or the second environmental indicator in accordance with a ratio at which the operational record information acquired by the operational record information acquisition unit is used for calculation of the first environmental indicator and/or the second environmental indicator.

According to the environmental impact evaluation system of the above (8), the grade determination unit assigns a grade in accordance with the reliability of the first environmental indicator and/or the second environmental indicator. Thus, the user can understand the reliability of the first environmental indicator and/or the second environmental indicator, and can appropriately evaluate the environmental impact related to the product desired by the user in accordance with the circumstances for each product.

(9) In the environmental impact evaluation system according to any one of the above (1) to (8), if the product is footwear, the identification information for identifying the product includes identification information for a left foot and identification information for a right foot.

According to the environmental impact evaluation system of the above (9), in a case where the product is footwear, the product has identification information for the left foot and identification for the right foot, and thus it is possible to appropriately acquire information associated with the identification information for the left foot and the identification for the right foot. Thus, it is possible to appropriately evaluate the environmental impact related to the product desired by the user in accordance with the circumstances for each product.

(10) In the environmental impact evaluation system according to any one of the above (1) to (9), the first environmental indicator is obtained based on at least one or more of amount of carbon dioxide emissions, impact on land and soil, fossil fuel usage, usage amount of minerals and metals, water usage amount, impact on freshwater ecosystem, amount of nutrient emissions to freshwater system, impact on acidification, amount of nutrient emissions to oceanic system, amount of nutrient emissions to terrestrial ecosystem, amount of photochemical ozone emissions, impact on respiratory system, amount of radioactive substance emissions, amount of carcinogen emissions, amount of emissions of non-carcinogenic toxic substances and poisonous substances, and impact on ozone layer depletion.

Furthermore, terms other than those exemplified so far, or any new terms added in the future, may be adopted as the environmental indicator. According to the environmental impact evaluation system of the above (10), it is possible to perform evaluation, based on various terms as the environmental indicator.

(11) An other aspect of the present disclosure relates to an environmental impact evaluation method executed by an environmental impact evaluation system evaluating an environmental impact related to a product that is any of clothing, footwear, and accessories, the environmental impact evaluation method including: acquiring, from a storage unit, identification information for identifying the product, the identification information being associated with related information of the product corresponding to a user who uses the product, material information related to a material of the product, and manufacturing information related to manufacturing of the product; generating prediction information including: material prediction information related to a material of the product generated in relation to manufacturing of the product corresponding to the identification information; and manufacturing prediction information related to manufacturing of the product, based on the material information and the manufacturing information; calculating a first environmental indicator related to the environmental impact related to the product, based on the prediction information including the material prediction information and the manufacturing prediction information; and outputting the calculated first environmental indicator.

According to the environmental impact evaluation method of the above (11), the identification information for identifying the product, the material information, and the manufacturing information are stored in the storage unit, and the material prediction information and the manufacturing prediction information of the product are generated based on the material information and the manufacturing information in the environmental impact evaluation method. Then, in the environmental impact evaluation method, the first environmental indicator is calculated and output based on the material prediction information and the manufacturing prediction information. Thus, it is possible to appropriately evaluate the environmental impact related to the product desired by the user in accordance with the circumstances for each product.

(12) An other aspect of the present disclosure relates to an environmental impact evaluation program causing a computer to execute an environmental impact evaluation method evaluating an environmental impact related to a product that is any of clothing, footwear, and accessories, the environmental impact evaluation program executing: acquiring, from a storage unit, identification information for identifying the product, the identification information being associated with related information of the product corresponding to a user who uses the product, material information related to a material of the product, and manufacturing information related to manufacturing of the product; generating prediction information including: material prediction information related to a material of the product generated in relation to manufacturing of the product corresponding to the identification information; and manufacturing prediction information related to manufacturing of the product, based on the material information and the manufacturing information; calculating a first environmental indicator related to the environmental impact related to the product, based on the prediction information including the material prediction information and the manufacturing prediction information; and outputting the calculated first environmental indicator.

According to the environmental impact evaluation program of the above (12), the identification information for identifying the product, the material information, and the manufacturing information are stored in the storage unit, and the environmental impact evaluation program generates the material prediction information and the manufacturing prediction information of the product, based on the material information and the manufacturing information. Then, the environmental impact evaluation program calculates the first environmental indicator, based on the material prediction information and the manufacturing prediction information, and outputs the first environmental indicator. Thus, it is possible to appropriately evaluate the environmental impact related to the product desired by the user in accordance with the circumstances for each product.

(13) An other aspect of the present disclosure relates to a storage medium storing therein an environmental impact evaluation program causing a computer to execute an environmental impact evaluation method evaluating an environmental impact related to a product that is any of clothing, footwear, and accessories, the environmental impact evaluation program stored in the storage medium executing: acquiring, from a storage unit, identification information for identifying the product, the identification information being associated with related information of the product corresponding to a user who uses the product, material information related to a material of the product, and manufacturing information related to manufacturing of the product; generating prediction information including: material prediction information related to a material of the product generated in relation to manufacturing of the product corresponding to the identification information; and manufacturing prediction information related to manufacturing of the product, based on the material information and the manufacturing information; calculating a first environmental indicator related to the environmental impact related to the product, based on the prediction information including the material prediction information and the manufacturing prediction information; and outputting the calculated first environmental indicator.

According to the storage medium of the above (13), the identification information for identifying the product, the material information, and the manufacturing information are stored in the storage unit by the environmental impact evaluation program stored in the storage medium, and the material prediction information and the manufacturing prediction information of the product are generated based on the material information and the manufacturing information by the environmental impact evaluation program. Then, the environmental impact evaluation program calculates the first environmental indicator, based on the material prediction information and the manufacturing prediction information, and outputs the first environmental indicator. Thus, it is possible to appropriately evaluate the environmental impact related to the product desired by the user in accordance with the circumstances for each product.

The above-described embodiments are intended to facilitate understanding of the present disclosure, and are not intended to be construed in a limiting sense. The elements of the embodiments as well as arrangement, materials, conditions, shapes, sizes, etc. of the elements are not limited to those exemplified and can be changed as appropriate. Furthermore, configurations in different embodiments may be partially replaced or combined with each other.

INDUSTRIAL APPLICABILITY

The present disclosure is useful for a system, or the like, evaluating an environmental impact related to a product which is any one of clothing, footwear, or accessories.

**Claims**

1. An environmental impact evaluation system evaluating an environmental impact related to a product that is any of clothing, footwear, and accessories, the environmental impact evaluation system comprising:

    a storage unit that stores identification information for identifying the product, the identification information being associated with related information of the product corresponding to a user who uses the product, material information related to a material of the product, and manufacturing information related to manufacturing of the product;
    a prediction information generation unit that generates prediction information including: material prediction information related to a material of the product generated in relation to manufacturing of the product corresponding to the identification information; and manufacturing prediction information related to manufacturing of the product, based on the material information and the manufacturing information;
    an environmental indicator calculation unit that calculates a first environmental indicator related to the environmental impact related to the product, based on the prediction information including the material prediction information and the manufacturing prediction information; and
    an output unit that outputs the calculated first environmental indicator.

2. The environmental impact evaluation system according to claim 1, wherein

    the storage unit further stores at least one or more of transportation information related to transportation of the product, use information related to use of the product, and disposal information related to disposal of the product, and
    the prediction information generation unit generates prediction information including at least one or more of: transportation prediction information related to transportation, which is generated in relation to transportation of the product corresponding to the identification information; use prediction information related to use of the product, which is generated in relation to using of the product; and disposal prediction information related to disposal of the product, which is generated in relation to disposing of the product, based on at least one or more of the transportation information, the use information, and the disposal information, and
    the environmental indicator calculation unit calculates the first environmental indicator, based on the prediction information including at least one or more of the transportation prediction information, the use prediction information, and the disposal prediction information, in addition to the material prediction information and the manufacturing prediction information.

3. The environmental impact evaluation system according to claim 1 or 2, further comprising:

    an operational record information acquisition unit that acquires operational record information including at least one or more of material record information related to a material of an actual manufactured product resulting from manufacturing of the product and manufacturing record information related to manufacturing of the actual manufactured product, wherein
    the environmental indicator calculation unit calculates a second environmental indicator related to an environmental impact related to the actual manufactured product, based on the operational record information including at least one or more of the material record information and the manufacturing record information, and
the output unit outputs the calculated second environmental indicator together with the first environmental indicator or so as to update the first environmental indicator.

4. The environmental impact evaluation system according to claim 3, wherein

the operational record information acquisition unit further acquires operational record information including transportation record information related to transportation by which the actual manufactured product is delivered to a predetermined transportation destination, and
the environmental indicator calculation unit calculates the second environmental indicator, based on operational record information including the transportation record information, in addition to at least one or more of the material record information and the manufacturing record information, and
the output unit outputs the calculated second environmental indicator together with the first environmental indicator or so as to update the first environmental indicator.

5. The environmental impact evaluation system according to claim 3, wherein

the operational record information acquisition unit further acquires operational record information including at least one or more of use record information related to use of the actual manufactured product from a user who has used the actual manufactured product, and disposal record information related to disposal of the actual manufactured product from a user who has disposed of the actual manufactured product,
the environmental indicator calculation unit calculates the second environmental indicator, based on operational record information including at least one or more of the use record information and the disposal record information, in addition to at least one or more of the material record information and the manufacturing record information, and
the output unit outputs the calculated second environmental indicator together with the first environmental indicator or so as to update the first environmental indicator.

6. The environmental impact evaluation system according to claim 3, further comprising:

a prediction model that is updated by learning a difference between the prediction information and the operational record information, wherein
the prediction information generation unit generates the prediction information by using the prediction model.

7. The environmental impact evaluation system according to claim 6, further comprising:

a grade determination unit that determines a grade indicating reliability of the first environmental indicator and/or the second environmental indicator presented to the user by the output unit, wherein
the grade determination unit assigns a high grade to the first environmental indicator calculated based on the prediction information generated by using the updated prediction model, in accordance with the number of times of the updating.

8. The environmental impact evaluation system according to claim 3, further comprising:

a grade determination unit that determines a grade indicating reliability of the first environmental indicator and/or the second environmental indicator presented to the user by the output unit, wherein
the grade determination unit assigns a high grade to the first environmental indicator and/or the second environmental indicator in accordance with a ratio at which the operational record information acquired by the operational record information acquisition unit is used for calculation of the first environmental indicator and/or the second environmental indicator.

9. The environmental impact evaluation system according to claim 1, wherein
if the product is footwear, the identification information for identifying the product includes identification information for a left foot and identification information for a right foot.

10. The environmental impact evaluation system according to claim 1, wherein
the first environmental indicator is obtained based on at least one or more of amount of carbon dioxide emissions, impact on land and soil, fossil fuel usage, usage amount of minerals and metals, water usage amount, impact on freshwater ecosystem, amount of nutrient emissions to freshwater system, impact on acidification, amount of nutrient emissions to oceanic system, amount of nutrient emissions to terrestrial ecosystem, amount of photochemical ozone emissions, impact on respiratory system, amount of radioactive substance emissions, amount of carcinogen emissions, amount of emissions of non-carcinogenic toxic substances and poisonous substances, and impact on ozone layer depletion.

11. An environmental impact evaluation method executed by an environmental impact evaluation system evaluating an environmental impact related to a product that is any of clothing, footwear, and accessories, the environmental impact evaluation method comprising:

acquiring, from a storage unit, identification information for identifying the product, the identification information being associated with related information of the product corresponding to a user who uses the product, material information related to a material of the product, and manufacturing information related to manufacturing of the product;
generating prediction information including: material prediction information related to a material of the product generated in relation to manufacturing of the product corresponding to the identification information; and manufacturing prediction information related to manufacturing of the product, based on the material information and the manufacturing information;
calculating a first environmental indicator related to the environmental impact related to the product, based on the prediction information including the material prediction information and the manufacturing prediction information; and
outputting the calculated first environmental indicator.

12. A storage medium storing therein an environmental impact evaluation program causing a computer to execute an environmental impact evaluation method evaluating an environmental impact related to a product that is any of clothing, footwear, and accessories, the environmental impact evaluation method comprising:

acquiring, from a storage unit, identification information for identifying the product, the identification information being associated with related information of the product corresponding to a user who uses the product, material information related to a material of the product, and manufacturing information related to manufacturing of the product;
generating prediction information including: material prediction information related to a material of the product generated in relation to manufacturing of the product corresponding to the identification information; and manufacturing prediction information related to manufacturing of the product, based on the material information and the manufacturing information;
calculating a first environmental indicator related to the environmental impact related to the product, based on the prediction information including the material prediction information and the manufacturing prediction information; and
outputting the calculated first environmental indicator.

# FIG. 1

S10        S20        S30        S40        S50

MATERIAL → MANUFACTURING → TRANSPORTATION → USE → DISPOSAL

CARBON DIOXIDE EMISSION AMOUNT (MATERIAL)=
$\Sigma$(USED WEIGHT [g] ×EMISSION INTENSITY PER PART [$gCO_{2e}$/g])

CARBON DIOXIDE EMISSION AMOUNT (MANUFACTURING) =$\Sigma$(PROCESSING TIME
[h] × RATED POWER [kW] × EMISSION INTENSITY [$gCO_{2e}$/kWh]) + $\Sigma$ (FUEL USAGE
AMOUNT [g] × THERMAL EFFICIENCY [MJ/g] × EMISSION INTENSITY [$gCO_{2e}$/MJ])

CARBON DIOXIDE EMISSION AMOUNT (TRANSPORTATION) =
$\Sigma$(TRANSPORTATION WEIGHT [g] × TRANSPORTATION DISTANCE [km] ×
EMISSION INTENSITY [$gCO_{2e}$/g · km])

CARBON DIOXIDE EMISSION AMOUNT (USE) =
$\Sigma$(USAGE TIME [h] × RATED POWER [kW] × EMISSION INTENSITY [$gCO_{2e}$/kWh]) +
$\Sigma$ (MATERIAL USAGE AMOUNT [g] × EMISSION INTENSITY [$gCO_{2e}$/g])

CARBON DIOXIDE EMISSION AMOUNT (DISPOSAL) =
$\Sigma$(DISPOSAL WEIGHT [g] × EMISSION INTENSITY [$gCO_{2e}$/g])

# FIG. 2

ENVIRONMENTAL INDICATOR CALCULATION UNIT 10

# FIG. 3

USER INFORMATION U10

PHYSICAL INFORMATION (HEIGHT, WEIGHT, FOOT SIZE, FOOT SHAPE)

PRODUCT INFORMATION
(PRODUCT TYPE, PRODUCT SHAPE, PRODUCT COLOR)

DELIVERY INFORMATION
(DELIVERY ADDRESS, DELIVERY MEANS, DELIVERY DUE DATE)

MAINTENANCE INFORMATION (CLEANING METHOD, CLEANING FREQUENCY, REPAIR METHOD, STORAGE METHOD)

USE INFORMATION
(PURPOSE OF USE, TRAVEL DISTANCE, TRAVEL SPEED, STORAGE METHOD)

DISPOSAL INFORMATION (DISPOSAL METHOD)

# FIG. 4

D11

CAD
DATA

D10

| IDENTIFICATION INFORMATION |
| --- |
| ·PRODUCT INFORMATION (PRODUCT TYPE, PRODUCT SHAPE, PRODUCT COLOR)<br>·FOOT SIZE<br>·FOOT SHAPE |

D20

| MATERIAL INFORMATION |
| --- |
| ·MATERIAL TYPE<br>·USED WEIGHT |

D30

| MANUFACTURING INFORMATION |
| --- |
| ·MANUFACTURING PROCESS<br>·PROCESSING TIME<br>·FUEL USAGE AMOUNT<br>·RATED POWER<br>·THERMAL EFFICIENCIES |

# FIG. 5

ENVIRONMENTAL INDICATOR

CARBON DIOXIDE EMISSION AMOUNT — O10

CARBON DIOXIDE EMISSION AMOUNT (MATERIAL) — O11

CARBON DIOXIDE EMISSION AMOUNT (MANUFACTURING) — O12

# FIG. 6

**USER INFORMATION** — U10
- DELIVERY INFORMATION
- MAINTENANCE INFORMATION
- DISPOSAL INFORMATION

**CAD DATA** — D11

**IDENTIFICATION INFORMATION** — D10
- PRODUCT INFORMATION
(PRODUCT TYPE, PRODUCT SHAPE, PRODUCT COLOR)
- FOOT SIZE
- FOOT SHAPE

**MATERIAL INFORMATION** — D20
- MATERIAL TYPE
- USED WEIGHT

**MANUFACTURING INFORMATION** — D30
- MANUFACTURING PROCESS
- PROCESSING TIME
- FUEL USAGE AMOUNT
- RATED POWER
- THERMAL EFFICIENCIES

**TRANSPORTATION INFORMATION** — D40
- TRANSPORTATION MEANS
- TRANSPORTATION WEIGHT
- TRANSPORTATION DISTANCE

**USE INFORMATION** — D50
- CLEANING METHOD
- USAGE TIME
- RATED POWER
- MATERIAL USAGE AMOUNT

**DISPOSAL INFORMATION** — D60
- DISPOSAL MEANS
- WASTE WEIGHT

# FIG. 7

ENVIRONMENTAL INDICATOR

| CARBON DIOXIDE EMISSION AMOUNT | O10 |
| CARBON DIOXIDE EMISSION AMOUNT (MATERIAL) | O11 |
| CARBON DIOXIDE EMISSION AMOUNT (MANUFACTURING) | O12 |
| CARBON DIOXIDE EMISSION AMOUNT (TRANSPORTAION) | O13 |
| CARBON DIOXIDE EMISSION AMOUNT (USE) | O14 |
| CARBON DIOXIDE EMISSION AMOUNT (DISPOSAL) | O15 |

# FIG. 8

ENVIRONMENTAL IMPACT
EVALUATION METHOD M100

START

GENERATE PREDICTION
INFORMATION , BASED ON USER
INFORMATION AND EACH PIECE
OF INFORMATION IN DATABASE — S110

CALCULATE ENVIRONMENTAL
INDICATOR (CARBON DIOXIDE
EMISSION AMOUNT) — S120

OUTPUT ENVIRONMENTAL
INDICATOR (CARBON DIOXIDE
EMISSION AMOUNT) — S130

END

FIG. 9

ENVIRONMENTAL IMPACT
EVALUATION SYSTEM 20

200

110 — STORAGE UNIT

120 — PREDICTION INFORMATION GENERATION UNIT

230 — ENVIRONMENTAL INDICATOR CALCULATION UNIT

240 — OUTPUT UNIT

210 — OPERATIONAL RECORD INFORMATION ACQUISITION UNIT

U10 — USER INFORMATION

11

A10 — MATERIAL RECORD INFORMATION

A20 — MANUFACTURING RECORD INFORMATION

21

# FIG. 10

ENVIRONMENTAL INDICATOR

| | |
|---|---|
| CARBON DIOXIDE EMISSION AMOUNT | O20 |
| CARBON DIOXIDE EMISSION AMOUNT (MATERIAL RECORD) | O21 |
| CARBON DIOXIDE EMISSION AMOUNT (MANUFACTURING RECORD) | O22 |
| CARBON DIOXIDE EMISSION AMOUNT (TRANSPORTAION) | O13 |
| CARBON DIOXIDE EMISSION AMOUNT (USE) | O14 |
| CARBON DIOXIDE EMISSION AMOUNT (DISPOSAL) | O15 |

# FIG. 11

ENVIRONMENTAL IMPACT
EVALUATION METHOD M200

START

GENERATE PREDICTION INFORMATION, BASED ON USER INFORMATION AND EACH PIECE OF INFORMATION IN DATABASE — S110

CALCULATE ENVIRONMENTAL INDICATOR (CARBON DIOXIDE EMISSION AMOUNT) — S120

ACQUIRE MATERIAL RECORD INFORMATION AND MANUFACTURING RECORD INFORMATION — S210

CALCULATE ENVIRONMENTAL INDICATOR (CARBON DIOXIDE EMISSION AMOUNT), BASED ON MATERIAL RECORD INFORMATION AND MANUFACTURING RECORD INFORMATION — S220

OUTPUT ENVIRONMENTAL INDICATOR (CARBON DIOXIDE EMISSION AMOUNT) — S230

END

# FIG. 12

ENVIRONMENTAL IMPACT
EVALUATION SYSTEM 30

300

- 110 — STORAGE UNIT
- 120 — PREDICTION INFORMATION GENERATION UNIT
- 330 — ENVIRONMENTAL INDICATOR CALCULATION UNIT
- 340 — OUTPUT UNIT

310 — OPERATIONAL RECORD INFORMATION ACQUISITION UNIT

A30 — TRANSPORTATION RECORD INFORMATION
A40 — USE RECORD INFORMATION
A50 — DISPOSAL RECORD INFORMATION

U30 — USER INFORMATION

11

A10 — MATERIAL RECORD INFORMATION
A20 — MANUFACTURING RECORD INFORMATION

21

EP 4 685 715 A1

# FIG. 13

USER INFORMATION U30

PHYSICAL INFORMATION (HEIGHT, WEIGHT, FOOT SIZE, FOOT SHAPE)

PRODUCT INFORMATION
(PRODUCT TYPE, PRODUCT SHAPE, PRODUCT COLOR)

DELIVERY RECORD INFORMATION
(DELIVERY ADDRESS, DELIVERY MEANS, DELIVERY DUE DATE)

MAINTENANCE RECORD INFORMATION (CLEANING METHOD, CLEANING FREQUENCY, REPAIR METHOD, STORAGE METHOD)

USE RECORD INFORMATION
(PURPOSE OF USE, TRAVEL DISTANCE, TRAVEL SPEED, STORAGE METHOD)

DISPOSAL RECORD INFORMATION (DISPOSAL METHOD)

# FIG. 14

ENVIRONMENTAL INDICATOR

| CARBON DIOXIDE EMISSION AMOUNT | O30 |
| CARBON DIOXIDE EMISSION AMOUNT (MATERIAL RECORD) | O21 |
| CARBON DIOXIDE EMISSION AMOUNT (MANUFACTURING RECORD) | O22 |
| CARBON DIOXIDE EMISSION AMOUNT (TRANSPORTAION RECORD) | O33 |
| CARBON DIOXIDE EMISSION AMOUNT (USE RECORD) | O34 |
| CARBON DIOXIDE EMISSION AMOUNT (DISPOSAL RECORD) | O35 |

# FIG. 15

ENVIRONMENTAL IMPACT
EVALUATION METHOD M300

```
                    ┌──────────────┐
                    │    START     │
                    └──────────────┘
                           │
                           ▼
        ┌─────────────────────────────────┐
        │ GENERATE PREDICTION INFORMATION, │    S110
        │ BASED ON USER INFORMATION AND EACH│
        │ PIECE OF INFORMATION IN DATABASE │
        └─────────────────────────────────┘
                           │
                           ▼
        ┌─────────────────────────────────┐
        │ CALCULATE ENVIRONMENTAL          │    S120
        │ INDICATOR (CARBON DIOXIDE        │
        │ EMISSION AMOUNT)                 │
        └─────────────────────────────────┘
                           │
                           ▼
        ┌─────────────────────────────────┐
        │ ACQUIRE MATERIAL RECORD          │    S210
        │ INFORMATION AND MANUFACTURING    │
        │ RECORD INFORMATION               │
        └─────────────────────────────────┘
                           │
                           ▼
        ┌─────────────────────────────────┐
        │ CALCULATE ENVIRONMENTAL INDICATOR│    S220
        │ (CARBON DIOXIDE EMISSION AMOUNT),│
        │ BASED ON MATERIAL RECORD         │
        │ INFORMATION AND MANUFACTURING    │
        │ RECORD INFORMATION               │
        └─────────────────────────────────┘
                           │
                           ▼
        ┌─────────────────────────────────┐
        │ OUTPUT ENVIRONMENTAL             │    S230
        │ INDICATOR (CARBON DIOXIDE        │
        │ EMISSION AMOUNT)                 │
        └─────────────────────────────────┘
                           │
                           ▼
   S310           ╱◇──────────────◇╲
              ◇◇      IS              ◇◇─── No ──┐
              ◇◇  USER INFORMATION    ◇◇         │
                ◇◇   UPDATED?       ◇◇           │
                    ╲◇──────────────◇╱           │
                           │ Yes                  │
                           ▼                      │
        ┌─────────────────────────────────┐      │
        │ ACQUIRE UPDATED USER             │ S320 │
        │ INFORMATION (OPERATIONAL         │      │
        │ RECORD INFORMATION)              │      │
        └─────────────────────────────────┘      │
                           │                      │
                           ▼                      │
        ┌─────────────────────────────────┐      │
        │ CALCULATE ENVIRONMENTAL INDICATOR│ S330 │
        │ (CARBON DIOXIDE EMISSION AMOUNT),│      │
        │ BASED ON OPERATIONAL RECORD      │      │
        └─────────────────────────────────┘      │
                           │                      │
                           ▼                      │
        ┌─────────────────────────────────┐      │
        │ OUTPUT (UPDATE) ENVIRONMENTAL    │ S340 │
        │ INDICATOR (CARBON DIOXIDE        │      │
        │ EMISSION AMOUNT)                 │      │
        └─────────────────────────────────┘      │
                           │                      │
                           ▼                      │
                    ┌──────────────┐              │
                    │     END      │              │
                    └──────────────┘              │
```

# FIG. 16

PREDICTED VALUE

| IDENTIFICATION INFORMATION | | MATERIAL PREDICTION INFORMATION | | MANUFACTURING PREDICTION INFORMATION | | | |
|---|---|---|---|---|---|---|---|
| PRODUCT TYPE | SIZE | MATERIAL | USED WEIGHT | PROCESSING TIME | POWER CONSUMPTION | FUEL USAGE AMOUNT | THERMAL EFFICIENCY |
| A | 26cm | X1 | Y1 | Z1 | W1 | U1 | V1 |

ACTUAL VALUE

| IDENTIFICATION INFORMATION | | MATERIAL RECORD INFORMATION | | MANUFACTURING RECORD INFORMATION | | | |
|---|---|---|---|---|---|---|---|
| PRODUCT TYPE | SIZE | MATERIAL | USED WEIGHT | PROCESSING TIME | POWER CONSUMPTION | FUEL USAGE AMOUNT | THERMAL EFFICIENCY |
| A | 26cm | X1 | Y2 | Z2 | W2 | U2 | V2 |

# FIG. 17

ENVIRONMENTAL INDICATOR

| | |
|---|---|
| CARBON DIOXIDE EMISSION AMOUNT | [B] | O40
| CARBON DIOXIDE EMISSION AMOUNT (MATERIAL RECORD) | [A] | O21
| CARBON DIOXIDE EMISSION AMOUNT (MANUFACTURING RECORD) | [A] | O22
| CARBON DIOXIDE EMISSION AMOUNT (TRANSPORTATION RECORD) | [A] | O33
| CARBON DIOXIDE EMISSION AMOUNT (USE) | [B] | O14
| CARBON DIOXIDE EMISSION AMOUNT (DISPOSAL) | [B] | O15

FIG. 18

## EUROPEAN SEARCH REPORT

**Application Number**

EP 25 18 8031

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 964 349 A2 (NEC CORP [JP]) 15 December 1999 (1999-12-15) | 1-12 | INV.<br>G06Q10/06 |
| Y | * paragraph [0004] - paragraph [0020] * <br> * paragraph [0050] - paragraph [0065] * | 6,7 | G06Q30/018 |
| | ----- | | |
| X | US 2023/089850 A1 (ZHU XIAOGUANG [US] ET AL) 23 March 2023 (2023-03-23) <br> * paragraph [0010] - paragraph [0012] * <br> * paragraph [0018] - paragraph [0028] * | 1,11,12 | |
| | ----- | | |
| Y | CN 117 217 419 A (ZHONGDIAN SHANHE DIGITAL TECH NANTONG CO LTD) 12 December 2023 (2023-12-12) <br> * page 7 - page 11 * | 6,7 | |
| | ----- | | |
| A | KAAB ALI ET AL: "Combined life cycle assessment and artificial intelligence for prediction of output energy and environmental impacts of sugarcane production", SCIENCE OF THE TOTAL ENVIRONMENT, vol. 664, 10 May 2019 (2019-05-10), pages 1005-1019, XP085618673, ISSN: 0048-9697, DOI: 10.1016/J.SCITOTENV.2019.02.004 * page 1006 - page 1010 * | 6,7 | |
| | ----- | | |

**TECHNICAL FIELDS SEARCHED (IPC)**

G06Q

The present search report has been drawn up for all claims

| Place of search | Date of completion of the search | Examiner |
|---|---|---|
| Munich | 9 December 2025 | Chabot, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 8031

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | | Publication date | Patent family member(s) | | Publication date |
|---|---|---|---|---|---|
| EP 0964349 | A2 | 15-12-1999 | EP | 0964349 A2 | 15-12-1999 |
| | | | JP | H11353384 A | 24-12-1999 |
| | | | US | 6532464 B1 | 11-03-2003 |
| US 2023089850 | A1 | 23-03-2023 | US | 2023089850 A1 | 23-03-2023 |
| | | | WO | 2023049635 A1 | 30-03-2023 |
| CN 117217419 | A | 12-12-2023 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024120245 A

- JP 2024053672 A